# EUROPEAN PATENT APPLICATION

(11) **EP 4 589 950 A1**
(43) Date of publication of application: **23.07.2025**
(21) Application number: 23865260.6
(22) Date of filing: 29.08.2023
(51) Int. Cl.: H04N 19/597, H04N 19/63

(54) **INFORMATION PROCESSING DEVICE AND METHOD**

(30) Priority: 12.09.2022 JP 2022144745
(71) Applicant: Sony Group Corporation, Tokyo 108-0075 (JP)
(72) Inventor: HAYASHI Kao, Tokyo 108-0075 (JP); KUMA Satoru, Tokyo 108-0075 (JP); KATO Tsuyoshi, Tokyo 108-0075 (JP); NAKAGAMI Ohji, Tokyo 108-0075 (JP)
(74) Representative: D Young & Co LLP
(86) International application number: PCT/JP2023/031089
(87) International publication number: WO 2024/057903

(57) **Abstract**

The present disclosure relates to an information processing apparatus and method that enable encoding/decoding performance to be improved.

Displacement values of subdivision points obtained by segmentalizing a base mesh constituted of vertices and connections expressing a 3D structure of an object are hierarchized for each definition, the hierarchized displacement values of the subdivision points are packed in a 2D image for each of partial areas of the object, and a displacement video in which that 2D image is set as a frame is encoded. The present disclosure can be applied to, for example, an information processing apparatus, an electronic apparatus, an information processing method, a program, or the like.

## Description

### Technical Field

The present disclosure relates to an information processing apparatus and method, more particularly, to an information processing apparatus and method that enable encoding/decoding performance to be improved.

### Background Art

From the past, there has been V-DMC (Video-based Dynamic Mesh Coding) as an encoding method of a mesh which is 3D data that expresses a 3D structure of an object by vertices and connections (see, for example, Non-Patent Literature 1). In V-DMC, a mesh as an encoding target is expressed by a coarse base mesh and displacement values of subdivision points obtained by segmentalizing the base mesh, and the base mesh and the displacement values are encoded. The displacement values are stored (packed) in a 2D image and encoded as an image. Since the object may vary in a time direction (is dynamic), the mesh (i.e., base mesh and displacement values) is also dynamic. Accordingly, the displacement values are encoded as a moving image (displacement video) that uses the 2D image as a frame.

### Citation List

### Non-Patent Literature

Non-Patent Literature 1: Khaled Mammou, Jungsun Kim, Alexis Tourapis, Dimitri Podborski, Krasimir Kolarov, "[V-CG] Apple's Dynamic Mesh Coding CfP Response", ISO/IEC JTC 1/SC 29/WG 7 m59281, April 2022

### Disclosure of Invention

### Technical Problem

In this method, however, the displacement video is simply used only for packing the displacement values, and a further utilization of the displacement video has been demanded in recent years.

The present disclosure has been made in view of the circumstances as described above and aims at enabling the encoding/decoding performance to be improved by expanding a usage of displacement videos. Solution to Problem

An information processing apparatus according to an aspect of the present technology is an information processing apparatus including: a packing unit which hierarchizes, for each definition, displacement values of subdivision points obtained by segmentalizing a base mesh, and packs the hierarchized displacement values of the subdivision points in a 2D image for each of partial areas of an object; and a displacement video encoding unit which encodes a displacement video in which the 2D image is set as a frame, in which the base mesh is generated by decimating, from an original mesh as an encoding target that is constituted of vertices and connections expressing a 3D structure of the object, the vertices, and is a mesh which is coarser than the original mesh, and the displacement values are positional differences between the subdivision points and the vertices of the original mesh.

An information processing method according to an aspect of the present technology is an information processing method including: hierarchizing, for each definition, displacement values of subdivision points obtained by segmentalizing a base mesh, and packing the hierarchized displacement values of the subdivision points in a 2D image for each of partial areas of an object; and encoding a displacement video in which the 2D image is set as a frame, in which the base mesh is generated by decimating, from an original mesh as an encoding target that is constituted of vertices and connections expressing a 3D structure of the object, the vertices, and is a mesh which is coarser than the original mesh, and the displacement values are positional differences between the subdivision points and the vertices of the original mesh.

An information processing apparatus according to another aspect of the present technology is an information processing apparatus including: a displacement video decoding unit which decodes a bit stream and generates a displacement video in which a 2D image, in which displacement values of subdivision points obtained by segmentalizing a base mesh are hierarchized for each definition and packed for each of partial areas of an object, is set as a frame; an unpacking unit which unpacks the displacement values of the subdivision points of a desired hierarchy of a desired partial area, that have been packed in the 2D image of a current frame of the displacement video; a segmentation unit which segmentalizes the base mesh of the current frame; and a displacement value application unit which applies the displacement values of the subdivision points to the subdivision points of the segmentalized base mesh, in which the base mesh is generated by decimating, from an original mesh as an encoding target that is constituted of vertices and connections expressing a 3D structure of the object, the vertices, and is a mesh which is coarser than the original mesh, and the displacement values are positional differences between the subdivision points and the vertices of the original mesh.

An information processing method according to another aspect of the present technology is an information processing method including: decoding a bit stream and generating a displacement video in which a 2D image, in which displacement values of subdivision points obtained by segmentalizing a base mesh are hierarchized for each definition and packed for each of partial areas of an object, is set as a frame; unpacking the displacement values of the subdivision points of a desired hierarchy of a desired partial area, that have been packed in the 2D image of a current frame of the displacement video; segmentalizing the base mesh of the current frame; and applying the displacement values of the subdivision points to the subdivision points of the segmentalized base mesh, in which the base mesh is generated by decimating, from an original mesh as an encoding target that is constituted of vertices and connections expressing a 3D structure of the object, the vertices, and is a mesh which is coarser than the original mesh, and the displacement values are positional differences between the subdivision points and the vertices of the original mesh.

An information processing apparatus according to further another aspect of the present technology is an information processing apparatus including: a base mesh vertex displacement value derivation unit which derives base mesh vertex displacement values which are displacement values of vertices of a base mesh; a packing unit which hierarchizes, for each definition, displacement values of subdivision points obtained by segmentalizing the base mesh, and packs the base mesh vertex displacement values and the hierarchized displacement values of the subdivision points in a 2D image; and a displacement video encoding unit which encodes a displacement video in which the 2D image is set as a frame, in which the base mesh is generated by decimating, from an original mesh as an encoding target that is constituted of vertices and connections expressing a 3D structure of an object, the vertices, and is a mesh which is coarser than the original mesh, the displacement values of the subdivision points are positional differences between the subdivision points and the vertices of the original mesh, and the base mesh vertex displacement values are positional differences between the vertices of the base mesh and the vertices of the original mesh.

An information processing method according to further another aspect of the present technology is an information processing method including: deriving base mesh vertex displacement values which are displacement values of vertices of a base mesh; hierarchizing, for each definition, displacement values of subdivision points obtained by segmentalizing the base mesh, and packing the base mesh vertex displacement values and the hierarchized displacement values of the subdivision points in a 2D image; and encoding a displacement video in which the 2D image is set as a frame, in which the base mesh is generated by decimating, from an original mesh as an encoding target that is constituted of vertices and connections expressing a 3D structure of an object, the vertices, and is a mesh which is coarser than the original mesh, the displacement values of the subdivision points are positional differences between the subdivision points and the vertices of the original mesh, and the base mesh vertex displacement values are positional differences between the vertices of the base mesh and the vertices of the original mesh.

An information processing apparatus according to further another aspect of the present technology is an information processing apparatus including: a displacement video decoding unit which decodes a bit stream and generates a displacement video in which a 2D image, in which base mesh vertex displacement values which are displacement values of vertices of a base mesh and displacement values of subdivision points obtained by segmentalizing the base mesh are packed, is set as a frame; an unpacking unit which unpacks the base mesh vertex displacement values and the displacement values of the subdivision points that have been packed in the 2D image of a current frame of the displacement video; a base mesh vertex position application unit which applies the base mesh vertex displacement values to the vertices of the base mesh; a segmentation unit which segmentalizes the base mesh in which the base mesh vertex displacement values are applied to the vertices; and a displacement value application unit which applies the displacement values of the subdivision points to the subdivision points of the segmentalized base mesh, in which the base mesh is generated by decimating, from an original mesh as an encoding target that is constituted of vertices and connections expressing a 3D structure of an object, the vertices, and is a mesh which is coarser than the original mesh, the displacement values of the subdivision points are positional differences between the subdivision points and the vertices of the original mesh, and the base mesh vertex displacement values are positional differences between the vertices of the base mesh and the vertices of the original mesh.

An information processing method according to further another aspect of the present technology is an information processing method including: decoding a bit stream and generating a displacement video in which a 2D image, in which base mesh vertex displacement values which are displacement values of vertices of a base mesh and displacement values of subdivision points obtained by segmentalizing the base mesh are packed, is set as a frame; unpacking the base mesh vertex displacement values and the displacement values of the subdivision points that have been packed in the 2D image of a current frame of the displacement video; applying the base mesh vertex displacement values to the vertices of the base mesh; segmentalizing the base mesh in which the base mesh vertex displacement values are applied to the vertices; and applying the displacement values of the subdivision points to the subdivision points of the segmentalized base mesh, in which the base mesh is generated by decimating, from an original mesh as an encoding target that is constituted of vertices and connections expressing a 3D structure of an object, the vertices, and is a mesh which is coarser than the original mesh, the displacement values of the subdivision points are positional differences between the subdivision points and the vertices of the original mesh, and the base mesh vertex displacement values are positional differences between the vertices of the base mesh and the vertices of the original mesh.

In the information processing apparatus and method according to an aspect of the present technology, displacement values of subdivision points obtained by segmentalizing a base mesh are hierarchized for each definition, the hierarchized displacement values of the subdivision points are packed in a 2D image for each of partial areas of an object, and a displacement video in which the 2D image is set as a frame is encoded.

In the information processing apparatus and method according to another aspect of the present technology, a displacement video in which a 2D image, in which displacement values of subdivision points obtained by segmentalizing a base mesh are hierarchized for each definition and packed for each of partial areas of an object, is set as a frame is generated, the displacement values of the subdivision points of a desired hierarchy of a desired partial area, that have been packed in the 2D image of a current frame of the displacement video are unpacked, the base mesh of the current frame is segmentalized, and the displacement values of the subdivision points are applied to the subdivision points of the segmentalized base mesh.

In the information processing apparatus and method according to further another aspect of the present technology, base mesh vertex displacement values which are displacement values of vertices of a base mesh are derived, displacement values of subdivision points obtained by segmentalizing the base mesh are hierarchized for each definition, the base mesh vertex displacement values and the hierarchized displacement values of the subdivision points are packed in a 2D image, and a displacement video in which the 2D image is set as a frame is encoded.

In the information processing apparatus and method according to further another aspect of the present technology, a bit stream is decoded, a displacement video in which a 2D image, in which base mesh vertex displacement values which are displacement values of vertices of a base mesh and displacement values of subdivision points obtained by segmentalizing the base mesh are packed, is set as a frame is generated, the base mesh vertex displacement values and the displacement values of the subdivision points that have been packed in the 2D image of a current frame of the displacement video are unpacked, the base mesh vertex displacement values are applied to the vertices of the base mesh, the base mesh in which the base mesh vertex displacement values are applied to the vertices is segmentalized, and the displacement values of the subdivision points are applied to the subdivision points of the segmentalized base mesh.

### Brief Description of Drawings

[Fig. 1] A diagram for explaining V-DMC.
[Fig. 2] A diagram for explaining an example of packing.
[Fig. 3] A diagram for explaining an example of packing.
[Fig. 4] A diagram showing an example of an encoding method.
[Fig. 5] A diagram for explaining an example of packing.
[Fig. 6] A block diagram showing a main configuration example of an encoding apparatus.
[Fig. 7] A flowchart explaining an example of a flow of encoding processing.
[Fig. 8] A block diagram showing a main configuration example of the encoding apparatus.
[Fig. 9] A flowchart explaining an example of a flow of the encoding processing.
[Fig. 10] A block diagram showing a main configuration example of a decoding apparatus.
[Fig. 11] A flowchart explaining an example of a flow of decoding processing.
[Fig. 12] A block diagram showing a main configuration example of the decoding apparatus.
[Fig. 13] A flowchart explaining an example of a flow of the decoding processing.
[Fig. 14] A diagram for explaining an example of decoding procedures.
[Fig. 15] A diagram showing an example of the encoding method.
[Fig. 16] A diagram for explaining an example of the decoding procedures.
[Fig. 17] A diagram for explaining an example of packing.
[Fig. 18] A block diagram showing a main configuration example of the encoding apparatus.
[Fig. 19] A flowchart explaining an example of a flow of the encoding processing.
[Fig. 20] A block diagram showing a main configuration example of the encoding apparatus.
[Fig. 21] A flowchart explaining an example of a flow of the encoding processing.
[Fig. 22] A block diagram showing a main configuration example of the decoding apparatus.
[Fig. 23] A flowchart explaining an example of a flow of the decoding processing.
[Fig. 24] A block diagram showing a main configuration example of the decoding apparatus.
[Fig. 25] A flowchart explaining an example of a flow of the decoding processing.
[Fig. 26] A block diagram showing a main configuration example of a computer.

### Modes for Carrying Out the Invention

Hereinafter, configurations for executing the present disclosure (hereinafter, will be referred to as embodiments) will be described. It is noted that the descriptions will be given in the following order.
1. Literatures that support technical contents and technical terms, etc.
2. Mesh encoding
3. Packing for each partial area
4. Packing of base mesh vertex displacement values
5. Notes

### <1. Literatures that support technical contents and technical terms, etc.>

The range disclosed in the present technology includes not only contents described in the embodiments but also contents described in the following non-patent literature and the like that has already been known at the time of the application, contents of other literatures that are referenced in the following non-patent literature, and the like.

### Non-Patent Literature 1: (described above)

In other words, the contents described in the non-patent literature described above, the contents of other literatures that are referenced in the non-patent literature described above, and the like also become grounds in determining supporting conditions.

### <2. Mesh encoding>

### <V-DMC>

From the past, as 3D data expressing a 3D structure of a 3D structural object (3D-shaped object), there has been a mesh (Mesh) in which polygons are formed by vertices and connections to thus express a 3D shape of an object surface. As an encoding method of this mesh, there has been V-DMC (Video-based Dynamic Mesh Coding) as disclosed in Non-Patent Literature 1, for example.

In V-DMC, a mesh as an encoding target is expressed by a coarse base mesh and displacement values of subdivision points obtained by segmentalizing the base mesh, and the base mesh and the displacement values are encoded.

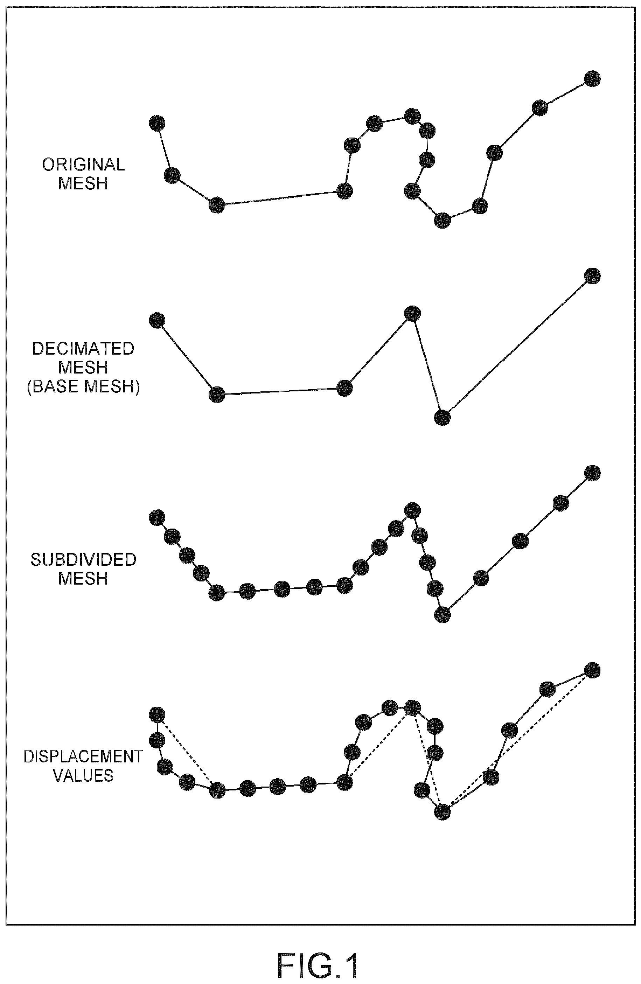

For example, it is assumed that there is an original mesh as shown on the top row in Fig. 1. In Fig. 1, black dots indicate vertices, and lines connecting the black dots indicate connections. Although polygons are originally formed by the vertices and connections in the mesh as described above, descriptions will be given herein as a vertex group that is connected linearly (in line) for convenience of descriptions.

A coarse mesh as shown on the second row from the top in Fig. 1 is formed by decimating (Decimate) some vertices of the original mesh. This becomes the base mesh.

By subdividing (Subdivide) each mesh of this base mesh, the vertices are added as shown on the third row from the top in Fig. 1. Herein, by this subdivision, the vertices are added only by the number decimated from the original mesh. Thus, a mesh having the same number of vertices as the original mesh is obtained. In the present specification, the added vertices are also referred to as subdivision points.

However, since the connection is updated when decimating the vertices of the original mesh and the subdivision points are formed on this updated connection, the shape of this subdivided base mesh differs from the shape of the original mesh. More specifically, positions of the subdivision points differ from those of the original mesh. Since the original mesh is known, it is possible to obtain this displacement of the subdivision points.

In other words, if the decimation method and subdivision method described above are known, the original mesh can be expressed by the base mesh and the displacement values of the subdivision points. In the case of V-DMC, an encoder performs encoding while separating the original mesh into the base mesh and the displacement values of the subdivision points as described above. The displacement values of the subdivision points are stored in a 2D image and encoded as an image. In the present specification, storing data in a 2D image is also referred to as packing.

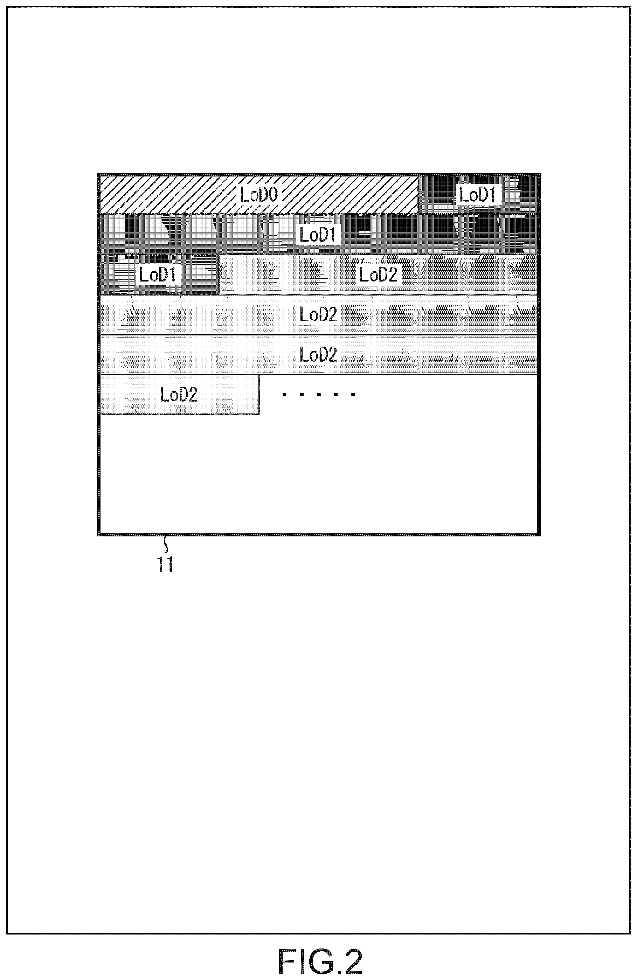

It is noted that V-DMC supports scalable decoding. The displacement values of the subdivision points are hierarchized for each definition and packed as data of each hierarchy as shown in Fig. 2, for example. In the example shown in Fig. 2, LoD0 packed in a 2D image 11 indicates data of displacement values of subdivision points of a highest hierarchy (lowest definition) out of the displacement values of the subdivision points that have been hierarchized for each definition. Similarly, LoD1 indicates data of displacement values of subdivision points of a hierarchy that is one hierarchy higher than LoD0. LoD2 indicates data of displacement values of subdivision points of a hierarchy that is one hierarchy higher than LoD1. In this manner, the displacement values of the subdivision points are separately packed for each hierarchy (compiled as data of each hierarchy).

It is noted that the displacement values of the subdivision points may be packed in the 2D image as transformation coefficients obtained by performing coefficient transform such as wavelet transform, for example. Alternatively, the displacement values of the subdivision points may be quantized. For example, the displacement values of the subdivision points may be converted into transformation coefficients by the wavelet transform, and the transformation coefficients may be quantized so that the quantized transformation coefficients (quantized coefficients) are packed.

Further, an object may vary in a time direction. In the present specification, being variable in the time direction will also be expressed as "being dynamic". Therefore, the mesh (i.e., the base mesh and the displacement values of the subdivision points) is also dynamic. Accordingly, the displacement values are encoded as a moving image in which the 2D image is set as a frame. In the present specification, this moving image will also be referred to as displacement video.

As the base mesh encoding method, there are intra coding and inter coding. In the case of intra coding, the base mesh is encoded for each frame. In contrast, in the case of inter coding, the base mesh is encoded as motion vectors that use the vertices of the base mesh of a reference frame as a reference. In other words, in this case, on the decoding side, the base mesh of the processing target frame can be reconstructed by adding the motion vectors to the vertices of the base mesh of the reference frame. It is noted that in the present specification, the base mesh of the reference frame will also be referred to as reference base mesh. In addition, the processing target frame will also be referred to as current frame. Moreover, the base mesh of the current frame will also be referred to as current base mesh.

### <Partial access>

However, in the method described in Non-Patent Literature 1, the displacement video is simply used only for packing the displacement values, and a further utilization of the displacement video has been demanded in recent years.

For example, a function that enables decoding to be performed for each partial area in a decoder (so-called partial access function) is demanded. For example, when reproducing an image of eyesight that is seen from a viewpoint position, a mesh of higher definition is required at a portion of the object that is close to the viewpoint position and stands out subjectively. In contrast, a mesh of low definition is sufficient at a portion that is far from the viewpoint position or a portion that does not stand out subjectively. Further, no mesh is required at a portion that is blocked in eyesight by the object and cannot be seen from the viewpoint position. In this manner, during the reproduction, requisite definition may vary for each partial area, or information of some areas may become unnecessary.

The partial function enables reproduction control to be performed for each partial area. Accordingly, by the partial function of V-DMC, also in the case of the reproduction as described above, reproduction can be performed for each partial area with desired definition, or only some areas can be reproduced. Accordingly, an increase of a processing amount of decoding processing can be suppressed.

However, since the displacement values of the entire object are packed collectively as shown in Fig. 2 in the method described in Non-Patent Literature 1, it has been necessary to reconstruct the entire mesh even when reproducing only the mesh of some areas or changing the definition for each partial area as described above. In other words, a complicated task of reconstructing a base mesh of the entire mesh, segmentalizing the entire base mesh, applying displacement values to respective subdivision points, and the like has been necessary. Accordingly, there has been a fear that the processing amount of the decoding processing will increase unnecessarily.

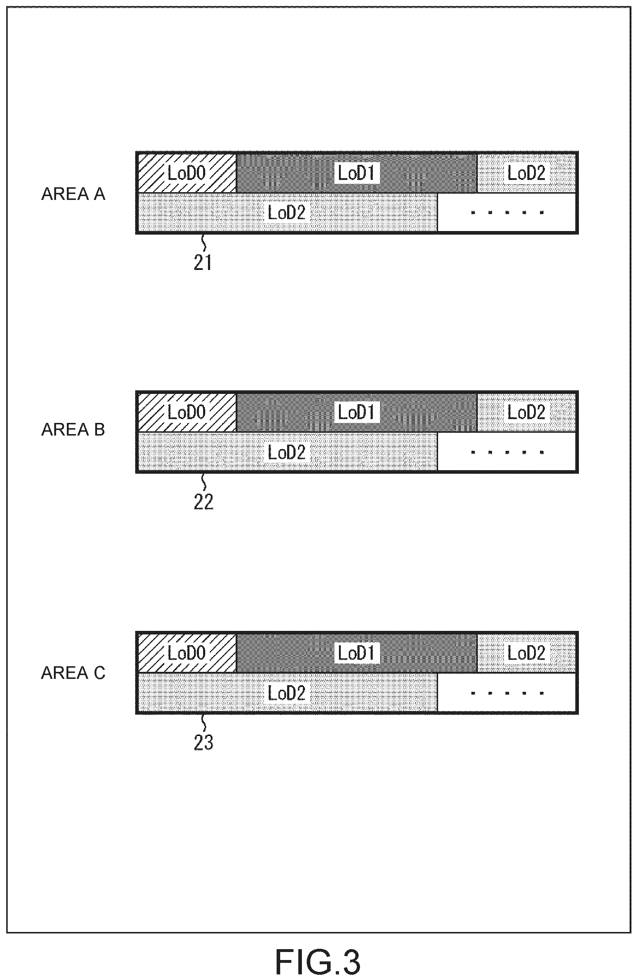

For realizing such a partial access function, a method of separating a 2D image to be used for packing for each partial area (i.e., generating a displacement video for each partial area) as shown in Fig. 3, for example, is conceivable. In the example of Fig. 3, displacement values of subdivision points of an area A are packed in a 2D image 21, displacement values of subdivision points of an area B are packed in a 2D image 22, and displacement values of subdivision points of an area C are packed in a 2D image 23. With such a configuration, since only the displacement video in which a desired area is packed can be decoded, the partial access function can be realized.

With this method, however, there is a need to generate a plurality of bit streams of the displacement video, so there has been a fear that an information amount will unnecessarily increase and encoding efficiency will be lowered as compared to a case where the number of bit streams of the displacement video is one. Although convenience is improved more as the areas for each of which the partial access function is realized become more minute, that requires an increase of the number of bit streams of the displacement video, and thus there has been a fear that the encoding efficiency will be additionally lowered.

Further, a 2D decoder that decodes encoded data of a displacement video has needed to boot an instance for each displacement video. Therefore, there has been a fear that, when decoding bit streams of a plurality of areas, the processing amount of decoding will increase unnecessarily as compared to the case where the number of bit streams of a displacement video is one. Although convenience is improved more as the areas for each of which the partial access function is realized become more minute, that requires an increase of the number of bit streams of the displacement video, and in that case, there has been a fear that a larger number of bit streams will highly likely be decoded and thus the processing amount of decoding will additionally increase.

### <3. Packing for each partial area>

### <Method 1>

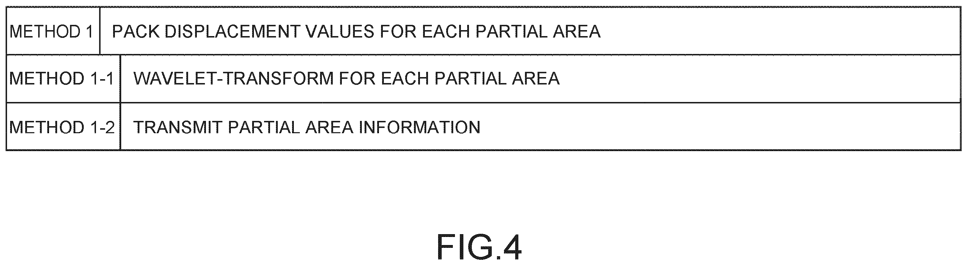

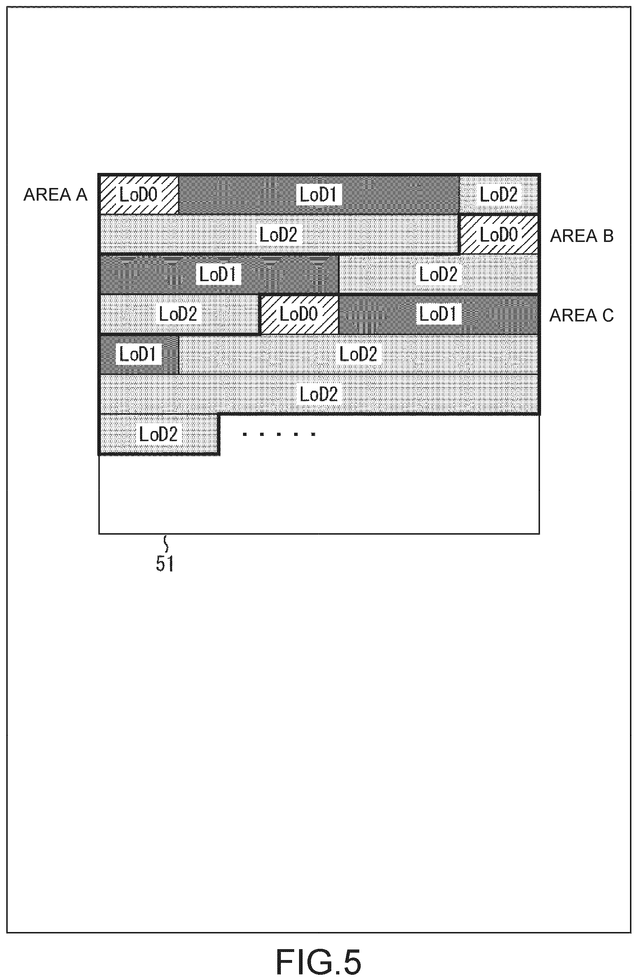

In this regard, as shown on the top row of the table shown in Fig. 4, the displacement values may be packed for each partial area of an object (Method 1). For example, in the case of a 2D image 51 shown in Fig. 5, as indicated by bold frames, the displacement values of the subdivision points of the respective hierarchies of the area A, the displacement values of the subdivision points of the respective hierarchies of the area B, and the displacement values of the subdivision points of the respective hierarchies of the area C are collectively packed, respectively. The areas A to C are the partial areas of the object. In other words, the displacement values of the subdivision points of the respective hierarchies are packed separately for each of the partial areas of the object. With such a configuration, the decoder can extract the displacement values of the subdivision points from the 2D image 51 for each of the partial areas of the object. It is to be added that the decoder can extract data of a desired partial area and desired definition from the 2D image 51.

In other words, the partial access function can be realized by applying Method 1. Accordingly, an increase of the processing amount of the decoding processing can be suppressed. Further, since the displacement values of the subdivision points of all of the areas can be packed in one displacement video in the case of this Method 1, lowering of the encoding efficiency can be suppressed as compared to the case of generating a displacement video for each partial area. Furthermore, the increase of the processing amount of the decoding processing can be suppressed. In other words, the encoding/decoding performance can be improved.

For example, an information processing apparatus may include: a packing unit which hierarchizes, for each definition, displacement values of subdivision points obtained by segmentalizing a base mesh, and packs the hierarchized displacement values of the subdivision points in a 2D image for each of partial areas of an object; and a displacement video encoding unit which encodes a displacement video in which the 2D image is set as a frame. It is noted that the base mesh may be generated by decimating, from an original mesh as an encoding target that is constituted of vertices and connections expressing a 3D structure of the object, the vertices. In other words, this base mesh may be a mesh which is coarser than the original mesh. In addition, the displacement values of the subdivision points may be positional differences between the subdivision points and the vertices of the original mesh (corresponding to the subdivision points).

For example, the information processing apparatus including the packing unit and the displacement video encoding unit described above may further include a base mesh encoding unit which encodes the base mesh of a current frame. Further, the information processing apparatus including the packing unit and the displacement video encoding unit described above may further include a motion vector encoding unit which encodes a motion vector of the vertices of the base mesh of the current frame that uses the base mesh of a reference frame as a reference.

For example, an information processing method may include: hierarchizing, for each definition, displacement values of subdivision points obtained by segmentalizing a base mesh , and packing the hierarchized displacement values of the subdivision points in a 2D image for each of partial areas of an object; and encoding a displacement video in which the 2D image is set as a frame. It is noted that the base mesh may be generated by decimating, from an original mesh as an encoding target that is constituted of vertices and connections expressing a 3D structure of the object, the vertices. In other words, this base mesh may be a mesh which is coarser than the original mesh. In addition, the displacement values of the subdivision points may be positional differences between the subdivision points and the vertices of the original mesh (corresponding to the subdivision points).

It is noted that in the present specification, extracting the data packed in the 2D image from the 2D image will also be referred to as unpacking. For example, when the displacement values of the subdivision points are packed in a 2D image by an encoder, the decoder unpacks the displacement values of the subdivision points from the 2D image. Further, when the displacement values of the subdivision points are subjected to coefficient transform (e.g., wavelet transform) and transformation coefficients thereof are packed by the encoder, the decoder unpacks the transformation coefficients from the 2D image and performs inverse coefficient transform (e.g., inverse wavelet transform), to thus derive the displacement values of the subdivision points. Further, when the displacement values of the subdivision points are quantized and quantized coefficients thereof are packed by the encoder, the decoder unpacks the quantized coefficients from the 2D image and performs inverse quantization, to thus derive the displacement values of the subdivision points. Furthermore, when the displacement values of the subdivision points are subjected to the coefficient transform (e.g., wavelet transform), transformation coefficients thereof are quantized, and quantized coefficients thereof are packed by the encoder, the decoder unpacks the quantized coefficients from the 2D image, performs inverse quantization to derive the transformation coefficients, and subjects the transformation coefficients to the inverse coefficient transform (e.g., inverse wavelet transform), to thus derive the displacement values of the subdivision points.

### <Method 1-1>

When applying this Method 1, as shown on the second row from the top in the table shown in Fig. 4, the displacement values of the subdivision points may be subjected to the wavelet transform for each partial area (Method 1-1). By performing the coefficient transform such as the wavelet transform on the displacement values of the subdivision points for each partial area, independency of data of each partial area can be maintained. In other words, the decoder can unpack data of a desired partial area (and further subject the unpacked data to the inverse wavelet transform) without requiring data of other partial areas. That is, the partial access function can be realized. Accordingly, effects similar to those of the case of Method 1 described above can be obtained.

For example, in the information processing apparatus including the packing unit and the displacement video encoding unit described above, the packing unit may wavelet-transform the displacement values of the subdivision points for each partial area and pack the obtained transformation coefficients in the 2D image.

### <Method 1-2>

When applying this Method 1, as shown on the bottom row in the table shown in Fig. 4, partial area information may be transmitted. As in the example of the 2D image 51 shown in Fig. 5, when packing the displacement values of the subdivision points separately for each partial area, the decoder needs to grasp which partial area of the displacement values of the subdivision points in the 2D image a desired partial area in the mesh corresponds to. In this regard, information indicating a range corresponding to the partial area in the mesh regarding each of the partial areas of the displacement values of the subdivision points packed in the 2D image (hereinafter, will also be referred to as mesh range designation information) may be transmitted from the encoder to the decoder. With such a configuration, the decoder can more easily grasp which partial area of the displacement values of the subdivision points in the 2D image a desired partial area in the mesh corresponds to.

In the mesh range designation information, for example, when a mesh is formed independently for each patch, a range of the mesh corresponding to each partial area may be indicated by using the patch ID. Further, when one mesh is formed in the entire area, a range of the mesh corresponding to each partial area may be indicated by using a vertex index or a mesh face index. In other words, the mesh range designation information may be a list of patch IDs, vertex indices, face indices, and the like that corresponds to each partial area. It is noted that when a decoding order is given and the numbers of faces corresponding to the respective partial areas are mutually the same, the number of faces may be transmitted as the mesh range designation information. The decoder can group the respective faces for each of the numbers of faces in the decoding order so that the groups correspond to the respective partial areas.

Further, the decoder needs to grasp where in the 2D image 51 the data of a desired partial area corresponding to a desired range in the mesh is packed. In this regard, information indicating a range of each partial area of the displacement values of the subdivision points in the 2D image (hereinafter, will also be referred to as intra-displacement-video range designation information) may be transmitted from the encoder to the decoder. With such a configuration, the decoder can more easily grasp where in the 2D image a desired partial area of the displacement values of the subdivision points in the 2D image is packed.

In the intra-displacement-video range designation information, a start position of a partial area may be indicated by using a pixel index. In addition, a range in which the data of each partial area is packed may be indicated by the number of pixels, or may be indicated by a block unit instead of pixels. For example, the start position of a partial area may be indicated by using a block index. Furthermore, the range in which the data of each partial area is packed may be indicated by the number of blocks. In other words, the intra-displacement-video range designation information may be a list of pixel indices, the numbers of pixels, block indices, the numbers of blocks, and the like that corresponds to each partial area. It is noted that when sizes of ranges in which data of the respective partial areas is packed are mutually the same (a fixed value known to the decoder), the transmission of the intra-displacement-video range designation information may be omitted. Furthermore, when the fixed value is unknown to the decoder, the fixed value may be transmitted as the intra-displacement-video range designation information.

In other words, these mesh range designation information and intra-displacement-video range designation information may be transmitted from the encoder to the decoder as information related to each of the partial areas of the displacement values of the subdivision points in the 2D image (hereinafter, will also be referred to as partial area information). With such a configuration, the decoder can more easily unpack the displacement values of the subdivision points of a desired partial area.

For example, the mesh range designation information and the intra-displacement-video range designation information are indicated as follows as a list of information corresponding to each partial area.

### Mesh range designation [1, 3, 4, 6]

### Intra-displacement-video range designation [0, 7, 15, 30]

In either information, elements are aligned in the order of the partial areas. Accordingly, the decoder can easily make a correspondence between the mesh range designation information and the intra-displacement-video range designation information on the basis of the number of the element. For example, in the case of the list described above, it is indicated that displacement values of subdivision points of a range indicated by "index 3" in a mesh are packed in an area indicated by "index 7" in a 2D image.

For example, in the information processing apparatus including the packing unit and the displacement video encoding unit described above, the displacement video encoding unit may further encode the partial area information. The partial area information may include the mesh range designation information indicating a range of a partial area in a mesh and the intra-displacement-video range designation information indicating a range of a partial area in a 2D image of a displacement video.

It is noted that an encoding method of the partial area information is arbitrary, and differential encoding or entropy encoding may be used. Alternatively, the partial area information does not need to be encoded.

Furthermore, a transmission method of the partial area information is arbitrary. For example, the partial area information may be stored in encoded data of a displacement video for each frame. Alternatively, the partial area information may be stored in header information of a bit stream that stores not only the displacement video but also an attribute and the like.

### <Encoding apparatus (intra)>

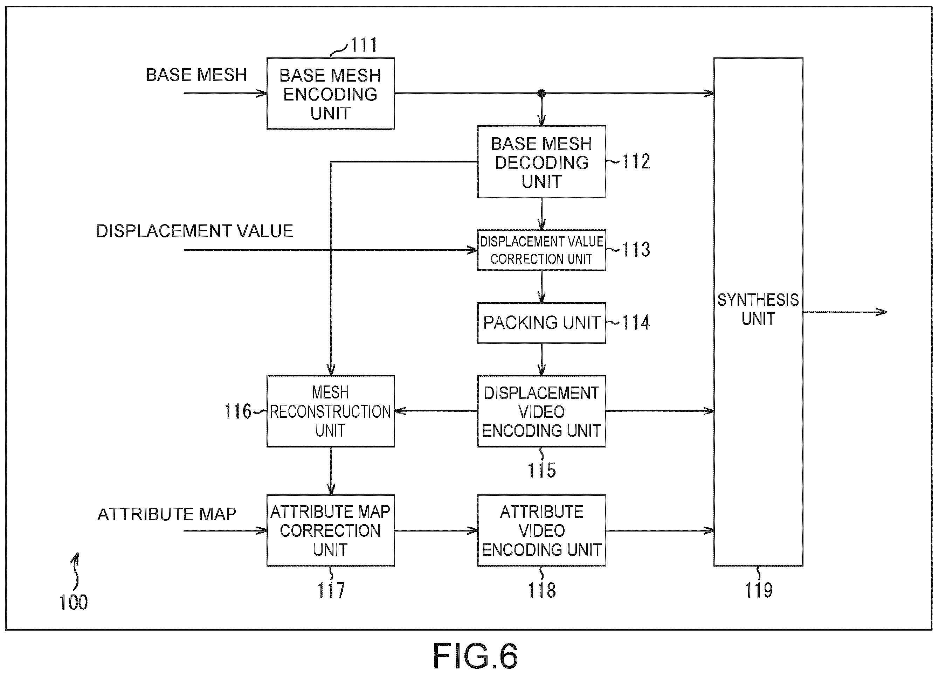

The present technology can be applied to an encoding apparatus which encodes a mesh. Fig. 6 is a block diagram showing an example of a configuration of the encoding apparatus as an embodiment of the information processing apparatus to which the present technology is applied. The encoding apparatus 100 shown in Fig. 6 is an apparatus which encodes a mesh. The encoding apparatus 100 encodes a mesh basically by a method similar to that of V-DMC described in Non-Patent Literature 1. The encoding apparatus 100 intra-codes a base mesh.

It is noted that the encoding apparatus 100 encodes a mesh by applying Method 1 described above. Alternatively, the encoding apparatus 100 may apply Method 1-1 or Method 1-2 described above.

It is noted that Fig. 6 shows a main configuration including processing units, data flows, and the like, and not all of the configurations are shown in Fig. 6. In other words, in the encoding apparatus 100, there may be processing units that are not illustrated as blocks in Fig. 6, or there may be processing and data flows that are not indicated by arrows and the like in Fig. 6.

As shown in Fig. 6, the encoding apparatus 100 includes a base mesh encoding unit 111, a base mesh decoding unit 112, a displacement value correction unit 113, a packing unit 114, a displacement video encoding unit 115, a mesh reconstruction unit 116, an attribute map correction unit 117, an attribute video encoding unit 118, and a synthesis unit 119.

In the encoding apparatus 100, a base mesh, displacement values of subdivision points, and an attribute map are supplied for each frame. It is noted that the base mesh may be generated by decimating, from an original mesh as an encoding target that is constituted of vertices and connections expressing a 3D structure of an object, the vertices. In other words, this base mesh may be a mesh which is coarser than the original mesh. In addition, the displacement values of the subdivision points may be positional differences between the subdivision points and the vertices of the original mesh (corresponding to the subdivision points). These pieces of data may be generated from the original mesh in preprocessing, for example.

The base mesh encoding unit 111 encodes a current base mesh and supplies the encoded data to the base mesh decoding unit 112 and the synthesis unit 119.

The base mesh decoding unit 112 decodes the supplied encoded data of the current base mesh to generate (restore) the current base mesh. This generated current base mesh contains an encoding distortion. The base mesh decoding unit 112 supplies this current base mesh to the displacement value correction unit 113 and the mesh reconstruction unit 116.

The displacement value correction unit 113 corrects the displacement values of the subdivision points using the supplied current base mesh (containing the encoding distortion). More specifically, the displacement value correction unit 113 segmentalizes the supplied current base mesh (containing the encoding distortion) and derives subdivision points. Then, the displacement value correction unit 113 corrects the displacement values of the subdivision points supplied to the encoding apparatus 100 using the derived subdivision points. The displacement value correction unit 113 supplies the corrected displacement values of the subdivision points to the packing unit 114.

The packing unit 114 packs the supplied displacement values of the subdivision points in a 2D image of the current frame (will also be referred to as frame image). At this time, the packing unit 114 may subject the displacement values of the subdivision points to the coefficient transform (e.g., wavelet transform) and pack transformation coefficients in the 2D image. Alternatively, the packing unit 114 may quantize the displacement values of the subdivision points (or the transformation coefficients) and pack quantized coefficients in the 2D image.

Further, the packing unit 114 applies Method 1 in this packing. In other words, the packing unit 114 packs the displacement values of the subdivision points for each of the partial areas of the object. For example, the packing unit 114 may hierarchize, for each definition, the displacement values of the subdivision points obtained by segmentalizing the base mesh, and pack the hierarchized displacement values of the subdivision points in the 2D image for each of the partial areas of the object.

Alternatively, the packing unit 114 may apply Method 1-1. In other words, the packing unit 114 may wavelet-transform the displacement values of the subdivision points for each partial area, and pack the obtained transformation coefficients in the 2D image.

Alternatively, the packing unit 114 may apply Method 1-2. In other words, the packing unit 114 may further generate partial area information including the mesh range designation information and the intra-displacement-video range designation information.

The packing unit 114 supplies the 2D image in which the displacement values of the subdivision points (or information corresponding thereto) are packed to the displacement video encoding unit 115. In addition, the packing unit 114 supplies the generated partial area information to the displacement video encoding unit 115.

The displacement video encoding unit 115 sets the supplied 2D image as a frame image and encodes it as a moving image (displacement video). The displacement video encoding unit 115 supplies the generated encoded data of the displacement video to the mesh reconstruction unit 116 and the synthesis unit 119.

Alternatively, the displacement video encoding unit 115 may apply Method 1-2. In other words, the displacement video encoding unit 115 may further encode the partial area information including the mesh range designation information and the intra-displacement-video range designation information. In that case, the displacement video encoding unit 115 supplies the generated encoded data of the partial area information to the synthesis unit 119.

The mesh reconstruction unit 116 decodes the supplied encoded data of the displacement video and unpacks the data from the 2D image, or the like, to derive the displacement values of the subdivision points. Moreover, the mesh reconstruction unit 116 segmentalizes the supplied current base mesh and applies the derived displacement values of the subdivision points to reconstruct the mesh. This mesh contains the encoding distortion. The mesh reconstruction unit 116 supplies the reconstructed mesh to the attribute map correction unit 117.

The attribute map correction unit 117 corrects an attribute map of a texture or the like using the supplied mesh (containing the encoding distortion), and supplies the corrected attribute map to the attribute video encoding unit 118.

The attribute video encoding unit 118 sets the supplied attribute map as a frame image and encodes it as a moving image (attribute video). The attribute video encoding unit 118 supplies the generated encoded data of the attribute video to the synthesis unit 119.

The synthesis unit 119 synthesizes (multiplexes) the encoded data of the base mesh, the encoded data of the displacement video, and the encoded data of the attribute video that have been supplied thereto, to generate one bit stream. It is noted that when the encoded data of the partial area information is supplied, the synthesis unit 119 also stores the encoded data of the partial area information in the bit stream. The synthesis unit 119 outputs the generated bit stream to the outside of the encoding apparatus 100. This bit stream is transmitted to a decoding apparatus via an arbitrary transmission medium or an arbitrary recording medium.

With such a configuration, the encoding apparatus 100 can realize the partial access function. Accordingly, the encoding apparatus 100 can suppress an increase of the processing amount of the decoding processing and suppress lowering of the encoding efficiency. In other words, the encoding apparatus 100 can improve the encoding/decoding performance.

### <Flow of encoding processing>

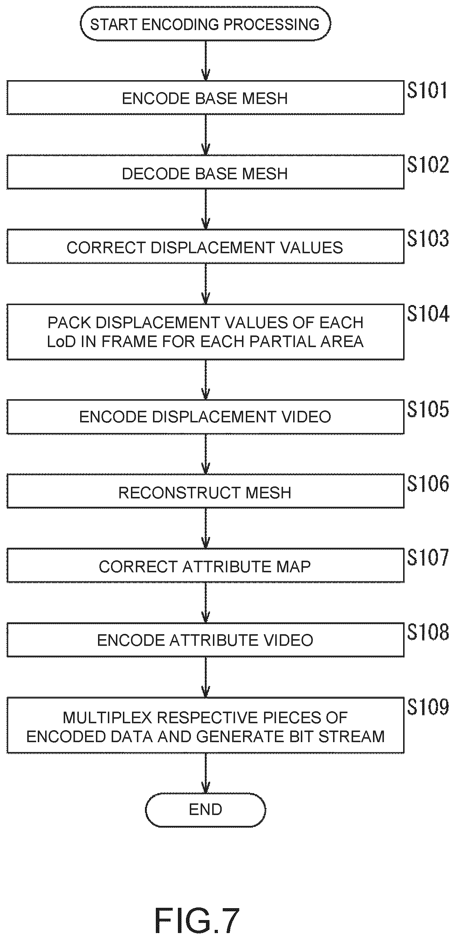

An example of a flow of encoding processing executed by this encoding apparatus 100 will be described with reference to the flowchart of Fig. 7.

Upon start of the encoding processing, the base mesh encoding unit 111 encodes a current base mesh in Step S101.

In Step S102, the base mesh decoding unit 112 decodes the encoded data of the base mesh.

In Step S103, the displacement value correction unit 113 corrects the displacement values of the subdivision points using the base mesh (containing the encoding distortion) generated in Step S102.

In Step S104, the packing unit 114 packs the displacement values of the subdivision points for each LoD in a frame (2D image) for each of the partial areas of the object. At this time, the packing unit 114 may subject the displacement values of the subdivision points to the coefficient transform (e.g., wavelet transform) for each partial area. Further, the packing unit 114 may generate partial area information.

In Step S105, the displacement video encoding unit 115 sets the packed 2D image as a frame image and encodes it as a displacement video. In addition, the displacement video encoding unit 115 may further encode the partial area information.

In Step S106, the mesh reconstruction unit 116 reconstructs the mesh using the base mesh (containing the encoding distortion) generated in Step S102 and the encoded data of the displacement video generated in Step S105.

In Step S107, the attribute map correction unit 117 corrects the attribute map using the reconstructed mesh.

In Step S108, the attribute video encoding unit 118 sets the corrected attribute map as a frame image and encodes it as an attribute video.

In Step S109, the synthesis unit 119 multiplexes the encoded data of the base mesh generated in Step S101, the encoded data of the displacement video generated in Step S105, and the encoded data of the attribute video generated in Step S108, to generate one bit stream. It is noted that when the encoded data of the partial area information is additionally generated in Step S105, the synthesis unit 119 may also store that encoded data in the bit stream.

Upon ending the processing of Step S109, the encoding processing is ended.

By executing the respective processing as described above, the encoding apparatus 100 can realize the partial access function. Accordingly, the encoding apparatus 100 can suppress an increase of the processing amount of the decoding processing and suppress lowering of the encoding efficiency. In other words, the encoding apparatus 100 can improve the encoding/decoding performance.

### <Encoding apparatus (inter)>

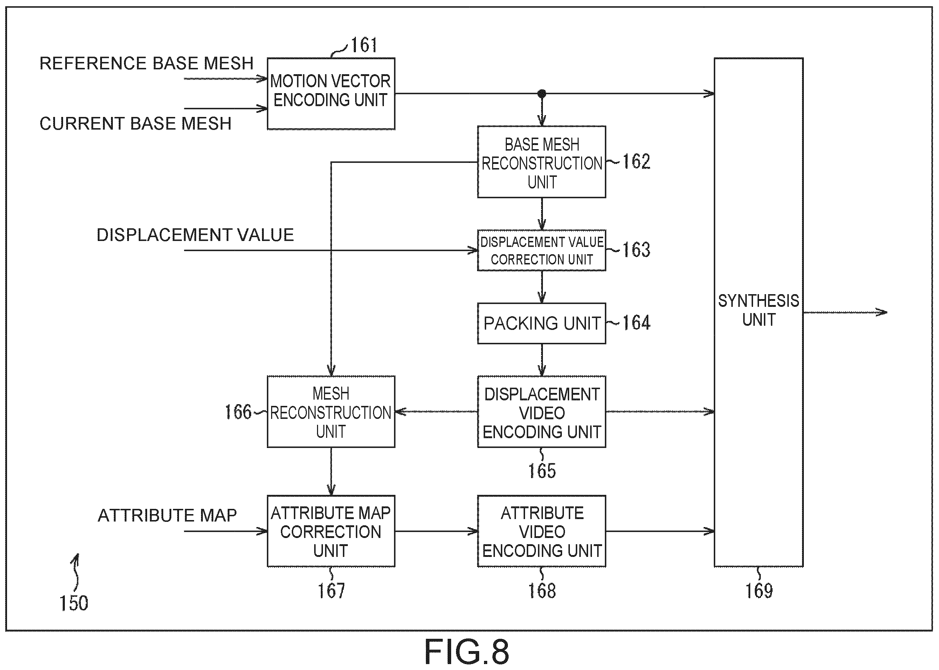

Fig. 8 is a block diagram showing an example of the configuration of the encoding apparatus as an embodiment of the information processing apparatus to which the present technology is applied. The encoding apparatus 150 shown in Fig. 8 is an apparatus which encodes a mesh. The encoding apparatus 150 encodes a mesh basically by a method similar to that of V-DMC described in Non-Patent Literature 1. The encoding apparatus 150 inter-codes a base mesh.

It is noted that the encoding apparatus 150 encodes a mesh by applying Method 1 described above. Alternatively, the encoding apparatus 150 may apply Method 1-1 or Method 1-2 described above.

It is noted that Fig. 8 shows a main configuration including processing units, data flows, and the like, and not all of the configurations are shown in Fig. 8. In other words, in the encoding apparatus 150, there may be processing units that are not illustrated as blocks in Fig. 8, or there may be processing and data flows that are not indicated by arrows and the like in Fig. 8.

As shown in Fig. 8, the encoding apparatus 150 includes a motion vector encoding unit 161, a base mesh reconstruction unit 162, a displacement value correction unit 163, a packing unit 164, a displacement video encoding unit 165, a mesh reconstruction unit 166, an attribute map correction unit 167, an attribute video encoding unit 168, and a synthesis unit 169.

In the encoding apparatus 150, a current base mesh, displacement values of subdivision points, and an attribute map are supplied for each frame. It is noted that the (current) base mesh may be generated by decimating, from an original mesh as an encoding target that is constituted of vertices and connections expressing a 3D structure of an object, the vertices. In other words, this base mesh may be a mesh which is coarser than the original mesh. In addition, the displacement values of the subdivision points may be positional differences between the subdivision points and the vertices of the original mesh (corresponding to the subdivision points). These pieces of data may be generated from the original mesh in preprocessing, for example. Moreover, the encoding apparatus 150 may acquire a base mesh of a reference frame (reference base mesh). The reference frame is a frame that can be referenced from the current frame and that has been processed in the past.

Using the current base mesh and the reference base mesh, the motion vector encoding unit 161 generates motion vectors that use vertices of the reference base mesh as a reference. In other words, the motion vector encoding unit 161 generates motion vectors that indicate displacements of the respective vertices between the current base mesh and the reference base mesh. The motion vector encoding unit 161 encodes the generated motion vectors and supplies the encoded data to the base mesh reconstruction unit 162 and the synthesis unit 169.

The base mesh reconstruction unit 162 decodes the supplied encoded data of the motion vectors to generate (restore) the motion vectors. Then, the base mesh reconstruction unit 162 reconstructs the current base mesh using the reference base mesh and the motion vectors. This reconstructed current base mesh contains an encoding distortion. The base mesh reconstruction unit 162 supplies this current base mesh to the displacement value correction unit 163 and the mesh reconstruction unit 166.

The displacement value correction unit 163 corrects the displacement values of the subdivision points using the supplied current base mesh (containing the encoding distortion). More specifically, the displacement value correction unit 163 segmentalizes the supplied current base mesh (containing the encoding distortion) and derives subdivision points. Then, the displacement value correction unit 163 corrects the displacement values of the subdivision points supplied to the encoding apparatus 150 using the derived subdivision points. The displacement value correction unit 163 supplies the corrected displacement values of the subdivision points to the packing unit 164.

The packing unit 164 packs the supplied displacement values of the subdivision points in a 2D image of the current frame (will also be referred to as frame image). At this time, the packing unit 164 may subject the displacement values of the subdivision points to the coefficient transform **(e.g.,** wavelet transform) and pack transformation coefficients in the 2D image. Alternatively, the packing unit 164 may quantize the displacement values of the subdivision points (or transformation coefficients) and pack quantized coefficients in the 2D image.

Further, the packing unit 164 applies Method 1 in this packing. In other words, the packing unit 164 packs the displacement values of the subdivision points for each of the partial areas of the object. For example, the packing unit 164 may hierarchize, for each definition, the displacement values of the subdivision points obtained by segmentalizing the base mesh, and pack the hierarchized displacement values of the subdivision points in the 2D image for each of the partial areas of the object.

Alternatively, the packing unit 164 may apply Method 1-1. In other words, the packing unit 164 may wavelet-transform the displacement values of the subdivision points for each partial area and pack the obtained transformation coefficients in the 2D image.

Alternatively, the packing unit 164 may apply Method 1-2. In other words, the packing unit 164 may further generate partial area information including the mesh range designation information and the intra-displacement-video range designation information.

The packing unit 164 supplies the 2D image in which the displacement values of the subdivision points (or information corresponding thereto) are packed to the displacement video encoding unit 165. The packing unit 164 also supplies the generated partial area information to the displacement video encoding unit 165.

The displacement video encoding unit 165 sets the supplied 2D image as a frame image and encodes it as a moving image (displacement video). The displacement video encoding unit 165 supplies the generated encoded data of the displacement video to the mesh reconstruction unit 166 and the synthesis unit 169.

Alternatively, the displacement video encoding unit 165 may apply Method 1-2. In other words, the displacement video encoding unit 165 may further encode the partial area information including the mesh range designation information and the intra-displacement-video range designation information. In that case, the displacement video encoding unit 165 supplies the generated encoded data of the partial area information to the synthesis unit 169.

The mesh reconstruction unit 166 decodes the supplied encoded data of the displacement video and unpacks the data from the 2D image, or the like, to derive the displacement values of the subdivision points. Moreover, the mesh reconstruction unit 166 segmentalizes the supplied current base mesh and applies the derived displacement values of the subdivision points to reconstruct the mesh. This mesh contains the encoding distortion. The mesh reconstruction unit 166 supplies the reconstructed mesh to the attribute map correction unit 167.

The attribute map correction unit 167 corrects an attribute map of a texture or the like using the supplied mesh (containing the encoding distortion), and supplies the corrected attribute map to the attribute video encoding unit 168.

The attribute video encoding unit 168 sets the supplied attribute map as a frame image and encodes it as a moving image (attribute video). The attribute video encoding unit 168 supplies the generated encoded data of the attribute video to the synthesis unit 169.

The synthesis unit 169 synthesizes (multiplexes) the encoded data of the motion vectors, the encoded data of the displacement video, and the encoded data of the attribute video that have been supplied thereto, to generate one bit stream. It is noted that when the encoded data of the partial area information is supplied, the synthesis unit 169 also stores the encoded data of the partial area information in the bit stream. The synthesis unit 169 outputs the generated bit stream to the outside of the encoding apparatus 150. This bit stream is transmitted to the decoding apparatus via an arbitrary transmission medium or an arbitrary recording medium.

With such a configuration, the encoding apparatus 150 can realize the partial access function. Accordingly, the encoding apparatus 150 can suppress an increase of the processing amount of the decoding processing and suppress lowering of the encoding efficiency. In other words, the encoding apparatus 150 can improve the encoding/decoding performance.

### <Flow of encoding processing>

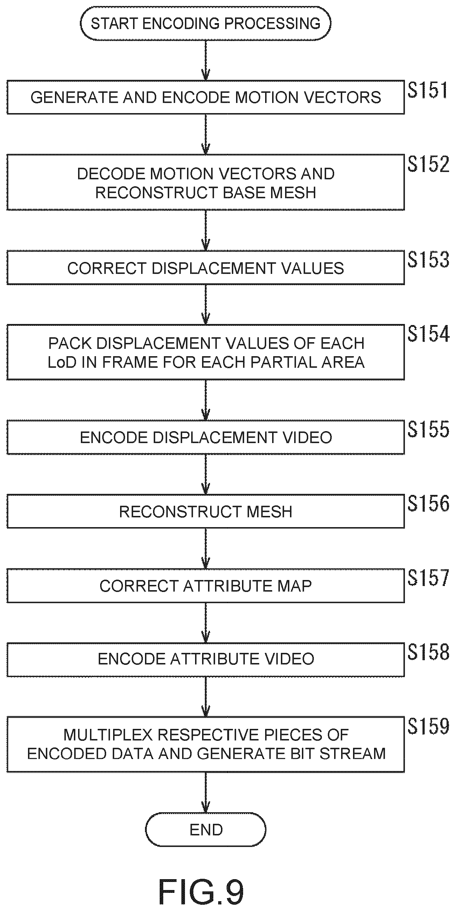

An example of a flow of encoding processing executed by this encoding apparatus 150 will be described with reference to the flowchart of Fig. 9.

Upon start of the encoding processing, the motion vector encoding unit 161 generates motion vectors using the reference base mesh and the current base mesh and encodes the motion vectors in Step S151.

In Step S152, the base mesh reconstruction unit 162 decodes the encoded data of the motion vectors and reconstructs the base mesh using the generated (restored) motion vectors and the reference base mesh.

In Step S153, the displacement value correction unit 163 corrects the displacement values of the subdivision points using the base mesh (containing the encoding distortion) reconstructed in Step S152.

In Step S154, the packing unit 164 packs the displacement values of the subdivision points for each LoD in a frame (2D image) for each of the partial areas of the object. At this time, the packing unit 164 may subject the displacement values of the subdivision points to the coefficient transform **(e.g.,** wavelet transform) for each partial area. In addition, the packing unit 164 may generate partial area information.

In Step S155, the displacement video encoding unit 165 sets the packed 2D image as a frame image and encodes it as a displacement video. Further, the displacement video encoding unit 165 may further encode the partial area information.

In Step S156, the mesh reconstruction unit 166 reconstructs the mesh using the base mesh (containing the encoding distortion) reconstructed in Step S152 and the encoded data of the displacement video generated in Step S155.

In Step S157, the attribute map correction unit 167 corrects the attribute map using the reconstructed mesh.

In Step S158, the attribute video encoding unit 168 sets the corrected attribute map as a frame image and encodes it as an attribute video.

In Step S159, the synthesis unit 169 multiplexes the encoded data of the motion vectors generated in Step S151, the encoded data of the displacement video generated in Step S155, and the encoded data of the attribute video generated in Step S158, to generate one bit stream. It is noted that when the encoded data of the partial area information is additionally generated in Step S155, the synthesis unit 169 may also store that encoded data in the bit stream.

Upon ending the processing of Step S169, the encoding processing is ended.

By executing the respective processing as described above, the encoding apparatus 150 can realize the partial access function. Accordingly, the encoding apparatus 150 can suppress an increase of the processing amount of the decoding processing and suppress lowering of the encoding efficiency. In other words, the encoding apparatus 150 can improve the encoding/decoding performance.

### <Method 1, Method 1-1, and Method 1-2>

It is noted that Method 1, Method 1-1, and Method 1-2 described above may also be applied to the decoding apparatus.

For example, an information processing apparatus may include: a displacement video decoding unit which decodes a bit stream and generates a displacement video in which a 2D image, in which displacement values of subdivision points obtained by segmentalizing a base mesh are hierarchized for each definition and packed for each of partial areas of an object, is set as a frame; an unpacking unit which unpacks the displacement values of the subdivision points of a desired hierarchy of a desired partial area, that have been packed in the 2D image of a current frame of the displacement video; a segmentation unit which segmentalizes the base mesh of the current frame; and a displacement value application unit which applies the displacement values of the subdivision points to the subdivision points of the segmentalized base mesh. It is noted that the base mesh may be generated by decimating, from an original mesh as an encoding target that is constituted of vertices and connections expressing a 3D structure of the object, the vertices. In other words, the base mesh may be a mesh which is coarser than the original mesh. Further, the displacement values of the subdivision points may be positional differences between the subdivision points and the vertices of the original mesh (corresponding to the subdivision points).

For example, the information processing apparatus including the displacement video decoding unit, the unpacking unit, and the displacement value application unit described above may further include a base mesh decoding unit which decodes a bit stream and generates a base mesh of a current frame. Further, the information processing apparatus including the displacement video decoding unit, the unpacking unit, and the displacement value application unit described above may further include: a motion vector generation unit which decodes a bit stream and generates a motion vector; and a base mesh reconstruction unit which applies the motion vector to the vertices of the base mesh of a reference frame to reconstruct the base mesh of the current frame.

For example, in the information processing apparatus including the displacement video decoding unit, the unpacking unit, and the displacement value application unit described above, the unpacking unit may unpack transformation coefficients of a desired hierarchy of a desired partial area and subject the transformation coefficients to inverse wavelet transform, to thus generate the displacement values of the subdivision points.

For example, the information processing apparatus including the displacement video decoding unit, the unpacking unit, and the displacement value application unit described above may further include a header decoding unit which decodes a bit stream and generates partial area information including mesh range designation information that indicates a range of the partial area in the mesh and intra-displacement-video range designation information that indicates a range of the partial area in the 2D image of the displacement video. Then, the unpacking unit may unpack the displacement values of the subdivision points of a desired hierarchy of a desired partial area on the basis of the intra-displacement-video range designation information. Further, the segmentation unit may segmentalizes a desired partial area of the base mesh on the basis of the mesh range designation information.

For example, an information processing method may include: decoding a bit stream and generating a displacement video in which a 2D image, in which displacement values of subdivision points obtained by segmentalizing a base mesh are hierarchized for each definition and packed for each of partial areas of an object, is set as a frame; unpacking the displacement values of the subdivision points of a desired hierarchy of a desired partial area, that have been packed in the 2D image of a current frame of the displacement video; segmentalizing the base mesh of the current frame; and applying the displacement values of the subdivision points to the subdivision points of the segmentalized base mesh. It is noted that the base mesh may be generated by decimating, from an original mesh as an encoding target that is constituted of vertices and connections expressing a 3D structure of the object, the vertices. In other words, the base mesh may be a mesh which is coarser than the original mesh. Further, the displacement values of the subdivision points may be positional differences between the subdivision points and the vertices of the original mesh (corresponding to the subdivision points).

### <Decoding apparatus (intra)>

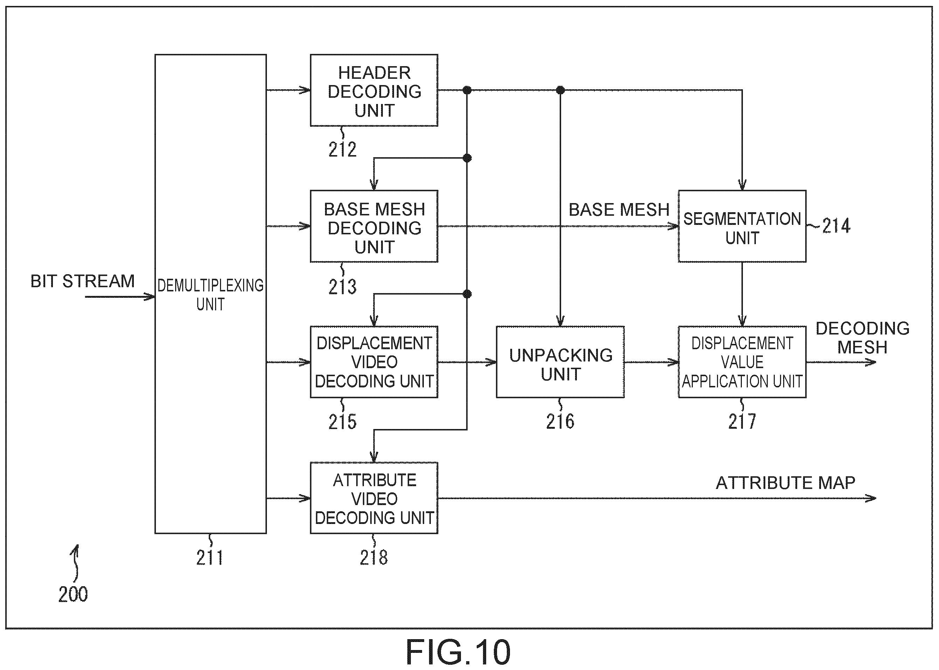

The present technology can be applied to the decoding apparatus which decodes encoded data of a mesh. Fig. 10 is a block diagram showing an example of a configuration of the decoding apparatus as an embodiment of the information processing apparatus to which the present technology is applied. The decoding apparatus 200 shown in Fig. 10 is an apparatus which decodes encoded data of a mesh. The decoding apparatus 200 decodes the encoded data of a mesh basically by a method similar to that of V-DMC described in Non-Patent Literature 1. The decoding apparatus 200 decodes (intra-decodes) the encoded data obtained by intra-coding the base mesh.

It is noted that the decoding apparatus 200 decodes the encoded data of a mesh by applying Method 1 described above. Alternatively, the decoding apparatus 200 may apply Method 1-1 or Method 1-2 described above.

In other words, the decoding apparatus 200 is a decoding apparatus corresponding to the encoding apparatus 100 shown in Fig. 6 and may decode a bit stream generated by the encoding apparatus 100 to reconstruct a mesh.

It is noted that Fig. 10 shows a main configuration including processing units, data flows, and the like, and not all of the configurations are shown in Fig. 10. In other words, in the decoding apparatus 200, there may be processing units that are not illustrated as blocks in Fig. 10, or there may be processing and data flows that are not indicated by arrows and the like in Fig. 10.

As shown in Fig. 10, the decoding apparatus 200 includes a demultiplexing unit 211, a header decoding unit 212, a base mesh decoding unit 213, a segmentation unit 214, a displacement video decoding unit 215, an unpacking unit 216, a displacement value application unit 217, and an attribute video decoding unit 218.

A bit stream generated by an encoding apparatus (e.g., encoding apparatus 100) that intra-codes a base mesh is supplied to the decoding apparatus 200.

The demultiplexing unit 211 demultiplexes the bit stream and extracts respective pieces of encoded data included in the bit stream. For example, the demultiplexing unit 211 extracts, from the bit stream, header information of the bit stream and supplies it to the header decoding unit 212. It is noted that encoded data of partial area information is assumed to be stored in this header information. In addition, the demultiplexing unit 211 extracts encoded data of a base mesh from the bit stream and supplies it to the base mesh decoding unit 213. Further, the demultiplexing unit 211 extracts encoded data of a displacement video from the bit stream and supplies it to the displacement video decoding unit 215. Furthermore, the demultiplexing unit 211 extracts encoded data of an attribute video from the bit stream and supplies it to the attribute video decoding unit 218.

The header decoding unit 212 decodes the supplied encoded data of the header information to generate (restore) the header information. The header decoding unit 212 supplies the generated header information to the base mesh decoding unit 213, the segmentation unit 214, the displacement video decoding unit 215, the unpacking unit 216, and the attribute video decoding unit 218.

The base mesh decoding unit 213 decodes the supplied encoded data of the base mesh on the basis of the supplied header information, to generate (restore) the current base mesh. The base mesh decoding unit 213 supplies the generated current base mesh to the segmentation unit 214.

The segmentation unit 214 segmentalizes the supplied base mesh on the basis of the supplied header information, and supplies the segmentalized base mesh to the displacement value application unit 217.

The segmentation unit 214 applies Method 1 in this segmentation. In other words, the segmentation unit 214 segmentalizes a desired partial area of the base mesh. At this time, the segmentation unit 214 may alternatively apply Method 1-2. In other words, the segmentation unit 214 may specify, on the basis of (the mesh range designation information included in) the partial area information included in the header information, a partial area corresponding to a desired range in the reconstructed mesh, and segmentalize the specified partial area of the base mesh.

The displacement video decoding unit 215 decodes the supplied encoded data of the displacement video on the basis of the supplied header information, to generate (restore) (the current frame of) the displacement video. The displacement video decoding unit 215 supplies the generated (current frame of) the displacement video to the unpacking unit 216.

The unpacking unit 216 unpacks, on the basis of the supplied header information, the displacement values of the subdivision points from the supplied current frame of the displacement video. At this time, the unpacking unit 216 may unpack transformation coefficients and subject the transformation coefficients to the coefficient transform (e.g., wavelet transform), to thus derive the displacement values of the subdivision points. Alternatively, the unpacking unit 216 may unpack quantized coefficients and subject the quantized coefficients to inverse quantization, to thus derive the displacement values of the subdivision points. Alternatively, the unpacking unit 216 may unpack quantized coefficients, subject the quantized coefficients to the inverse quantization to derive transformation coefficients, and subject the transformation coefficients to the coefficient transform (e.g., wavelet transform), to thus derive the displacement values of the subdivision points.

Further, the unpacking unit 216 applies Method 1 in this unpacking. In other words, the unpacking unit 216 unpacks the displacement values of the subdivision points of a desired partial area. For example, the unpacking unit 216 may unpack displacement values of subdivision points of a desired hierarchy of a desired partial area.

Alternatively, the unpacking unit 216 may apply Method 1-1. In other words, the unpacking unit 216 may unpack transformation coefficients of a desired hierarchy of a desired partial area and subject the transformation coefficients to inverse wavelet transform, to thus generate the displacement values of the subdivision points.

Alternatively, the unpacking unit 216 may apply Method 1-2. In other words, the unpacking unit 216 may specify, on the basis of (the intra-displacement-video range designation information included in) the partial area information included in the header information, where in a 2D image the data of a desired partial area is stored, and unpack the displacement values of the subdivision points of a desired hierarchy from the specified area.

The unpacking unit 216 supplies the unpacked displacement values of the subdivision points to the displacement value application unit 217.

The displacement value application unit 217 applies the supplied displacement values of the subdivision points to subdivision points of the supplied base mesh (segmentalized base mesh) to reconstruct the mesh. In the present specification, this mesh will also be referred to as decoding mesh. In other words, it can also be said that the displacement value application unit 217 generates a decoding mesh. The displacement value application unit 217 outputs the generated decoding mesh to the outside of the decoding apparatus 200.

The attribute video decoding unit 218 decodes the supplied encoded data of the attribute video on the basis of the supplied header information, to thus generate (a current frame of) an attribute video. The attribute video decoding unit 218 outputs the generated current frame of the attribute video, that is, an attribute map corresponding to the decoding mesh, to the outside of the decoding apparatus 200.

With such a configuration, the decoding apparatus 200 can realize the partial access function. Accordingly, the decoding apparatus 200 can suppress an increase of the processing amount of the decoding processing and suppress lowering of the encoding efficiency. In other words, the decoding apparatus 200 can improve the encoding/decoding performance.

### <Flow of decoding processing>

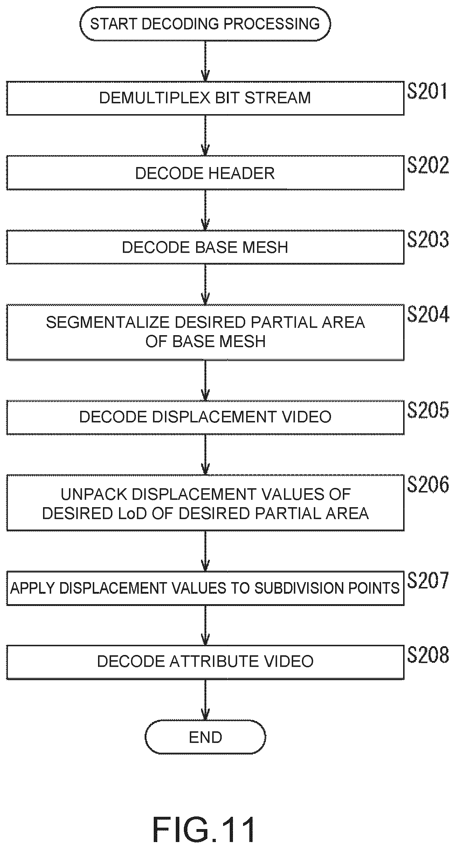

An example of a flow of decoding processing executed by this decoding apparatus 200 will be described with reference to the flowchart of Fig. 11.

Upon start of the decoding processing, the demultiplexing unit 211 demultiplexes a bit stream and extracts various types of encoded data in Step S201.

In Step S202, the header decoding unit 212 decodes the encoded data of the header information extracted in Step S201, to generate (restore) the header information.

In Step S203, the base mesh decoding unit 213 decodes the encoded data of the base mesh extracted in Step S201, to generate (restore) the current base mesh.

In Step S204, the segmentation unit 214 segmentalizes a desired partial area of the current base mesh. At this time, the segmentation unit 214 may specify, on the basis of (the mesh range designation information included in) the partial area information included in the header information, a partial area corresponding to a desired range in the mesh, and segmentalize the specified partial area of the base mesh.

In Step S205, the displacement video decoding unit 215 decodes the encoded data of the displacement video extracted in Step S201, to generate (restore) (the current frame of) the displacement video.

In Step S206, the unpacking unit 216 unpacks displacement values of desired LoD of a desired partial area from the current frame (2D image). At this time, the unpacking unit 216 may unpack transformation coefficients obtained by the coefficient transform (e.g., wavelet transform) performed for each partial area and subject the transformation coefficients to the inverse coefficient transform (e.g., inverse wavelet transform) for each partial area, to thus derive the displacement values of the subdivision points. Alternatively, the unpacking unit 216 may specify, on the basis of (the intra-displacement-video range designation information included in) the partial area information included in the header information, where in the 2D image the data of a desired partial area is stored, and unpack the displacement values of the subdivision points of a desired hierarchy from the specified area.

In Step S207, the displacement value application unit 217 applies the displacement values of the subdivision points unpacked in Step S206 to the subdivision points of the base mesh segmentalized in Step S204, to generate a decoding mesh.

In Step S208, the attribute video decoding unit 218 decodes the encoded data of the attribute video extracted in Step S201, to generate (restore) the current frame of the attribute video, that is, the attribute map.

Upon ending the processing of Step S208, the decoding processing is ended.

By executing the respective processing as described above, the decoding apparatus 200 can realize the partial access function. Accordingly, the decoding apparatus 200 can suppress an increase of the processing amount of the decoding processing and suppress lowering of the encoding efficiency. In other words, the decoding apparatus 200 can improve the encoding/decoding performance.

### <Decoding apparatus (inter)>

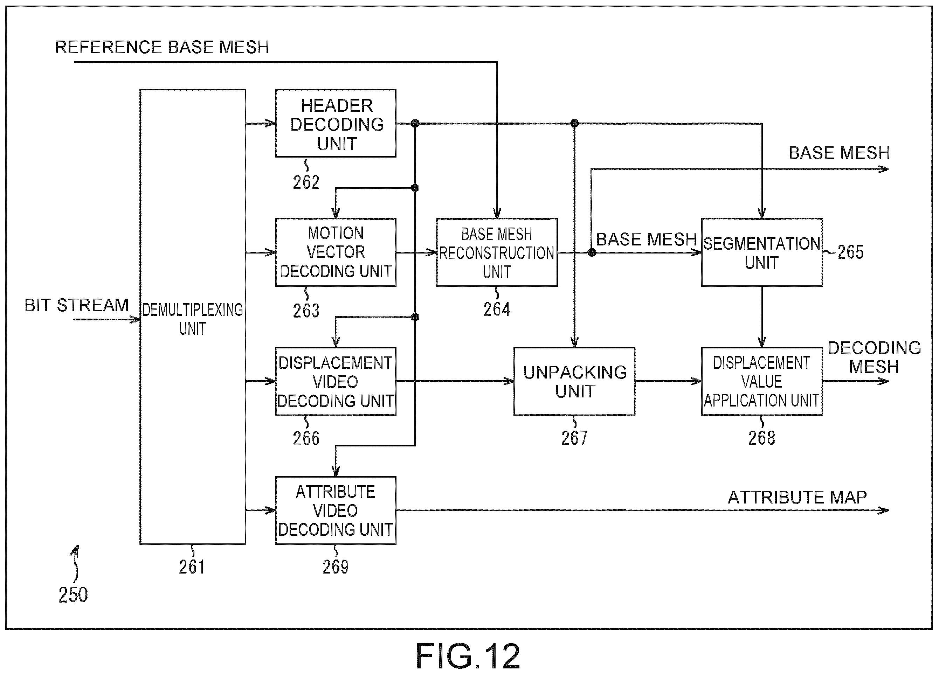

Fig. 12 is a block diagram showing an example of a configuration of the encoding apparatus as an embodiment of the information processing apparatus to which the present technology is applied. The decoding apparatus 250 shown in Fig. 12 is an apparatus which decodes encoded data of a mesh. The decoding apparatus 250 decodes the encoded data of a mesh basically by a method similar to that of V-DMC described in Non-Patent Literature 1. The decoding apparatus 250 decodes (inter-decodes) the encoded data obtained by inter-coding the base mesh.

It is noted that the decoding apparatus 250 decodes the encoded data of a mesh by applying Method 1 described above. Alternatively, the decoding apparatus 250 may apply Method 1-1 or Method 1-2 described above.

In other words, the decoding apparatus 250 is a decoding apparatus corresponding to the encoding apparatus 150 shown in Fig. 8 and may decode a bit stream generated by the encoding apparatus 150 to reconstruct a mesh.

It is noted that Fig. 12 shows a main configuration including processing units, data flows, and the like, and not all of the configurations are shown in Fig. 12. In other words, in the decoding apparatus 250, there may be processing units that are not illustrated as blocks in Fig. 12, or there may be processing and data flows that are not indicated by arrows and the like in Fig. 12.

As shown in Fig. 12, the decoding apparatus 250 includes a demultiplexing unit 261, a header decoding unit 262, a motion vector decoding unit 263, a base mesh reconstruction unit 264, a segmentation unit 265, a displacement video decoding unit 266, an unpacking unit 267, a displacement value application unit 268, and an attribute video decoding unit 269.

A bit stream generated by the encoding apparatus (e.g., encoding apparatus 150) that inter-codes a base mesh is supplied to the decoding apparatus 250.

The demultiplexing unit 261 demultiplexes the bit stream and extracts respective pieces of encoded data included in the bit stream. For example, the demultiplexing unit 261 extracts, from the bit stream, header information of the bit stream and supplies it to the header decoding unit 262. It is noted that encoded data of partial area information is assumed to be stored in this header information. In addition, the demultiplexing unit 261 extracts encoded data of motion vectors from the bit stream and supplies it to the motion vector decoding unit 263. Further, the demultiplexing unit 261 extracts encoded data of a displacement video from the bit stream and supplies it to the displacement video decoding unit 266. Furthermore, the demultiplexing unit 261 extracts encoded data of an attribute video from the bit stream and supplies it to the attribute video decoding unit 269.

The header decoding unit 262 decodes the supplied encoded data of the header information to generate (restore) the header information. The header decoding unit 262 supplies the generated header information to the motion vector decoding unit 263, the segmentation unit 265, the displacement video decoding unit 266, the unpacking unit 267, and the attribute video decoding unit 269.

The motion vector decoding unit 263 decodes the supplied encoded data of the motion vectors on the basis of the supplied header information, to generate (restore) the motion vectors. The motion vector decoding unit 263 supplies the generated motion vectors to the base mesh reconstruction unit 264.

The base mesh reconstruction unit 264 applies the supplied motion vectors to the reference base mesh to reconstruct the current base mesh. The base mesh reconstruction unit 264 supplies the reconstructed current base mesh to the segmentation unit 265. It is noted that the base mesh reconstruction unit 264 may supply the current base mesh to the outside of the decoding apparatus 250 or the like to be stored therein so that it can be reused as a reference base mesh in later frames. It is noted that the reference base mesh may alternatively be generated from a decoding mesh.

The segmentation unit 265 segmentalizes the supplied base mesh on the basis of the supplied header information, and supplies the segmentalized base mesh to the displacement value application unit 268.

The segmentation unit 265 applies Method 1 in this segmentation. In other words, the segmentation unit 265 segmentalizes a desired partial area of the base mesh. At this time, the segmentation unit 265 may alternatively apply Method 1-2. In other words, the segmentation unit 265 may specify, on the basis of (the mesh range designation information included in) the partial area information included in the header information, a partial area corresponding to a desired range in the mesh, and segmentalize the specified partial area of the base mesh.

The displacement video decoding unit 266 decodes the supplied encoded data of the displacement video on the basis of the supplied header information, to generate (restore) (the current frame of) the displacement video. The displacement video decoding unit 266 supplies the generated (current frame of) the displacement video to the unpacking unit 267.

The unpacking unit 267 unpacks, on the basis of the supplied header information, the displacement values of the subdivision points from the supplied current frame of the displacement video. At this time, the unpacking unit 267 may unpack transformation coefficients and subject the transformation coefficients to the coefficient transform (e.g., wavelet transform), to thus derive the displacement values of the subdivision points. Alternatively, the unpacking unit 267 may unpack quantized coefficients and subject the quantized coefficients to the inverse quantization, to thus derive the displacement values of the subdivision points. Alternatively, the unpacking unit 267 may unpack quantized coefficients, subject the quantized coefficients to the inverse quantization to derive transformation coefficients, and subject the transformation coefficients to the coefficient transform (e.g., wavelet transform), to thus derive the displacement values of the subdivision points.

Further, the unpacking unit 267 applies Method 1 in this unpacking. In other words, the unpacking unit 267 unpacks the displacement values of the subdivision points of a desired partial area. For example, the unpacking unit 267 may unpack displacement values of subdivision points of a desired hierarchy of a desired partial area.

Alternatively, the unpacking unit 267 may apply Method 1-1. In other words, the unpacking unit 267 may unpack transformation coefficients of a desired hierarchy of a desired partial area and subject the transformation coefficients to the inverse wavelet transform, to thus generate the displacement values of the subdivision points.

Alternatively, the unpacking unit 267 may apply Method 1-2. In other words, the unpacking unit 267 may specify, on the basis of (the intra-displacement-video range designation information included in) the partial area information included in the header information, where in a 2D image the data of a desired partial area is stored, and unpack the displacement values of the subdivision points of a desired hierarchy from the specified area.

The unpacking unit 267 supplies the unpacked displacement values of the subdivision points to the displacement value application unit 268.

The displacement value application unit 268 applies the supplied displacement values of the subdivision points to subdivision points of the supplied base mesh (segmentalized base mesh) to reconstruct the mesh (generate a decoding mesh). The displacement value application unit 268 outputs the generated decoding mesh to the outside of the decoding apparatus 250.

The attribute video decoding unit 269 decodes the supplied encoded data of the attribute video on the basis of the supplied header information, to thus generate (a current frame of) an attribute video. The attribute video decoding unit 269 outputs the generated current frame of the attribute video, that is, an attribute map corresponding to the decoding mesh, to the outside of the decoding apparatus 250.

With such a configuration, the decoding apparatus 250 can realize the partial access function. Accordingly, the decoding apparatus 250 can suppress an increase of the processing amount of the decoding processing and suppress lowering of the encoding efficiency. In other words, the decoding apparatus 250 can improve the encoding/decoding performance.

### <Flow of decoding processing>

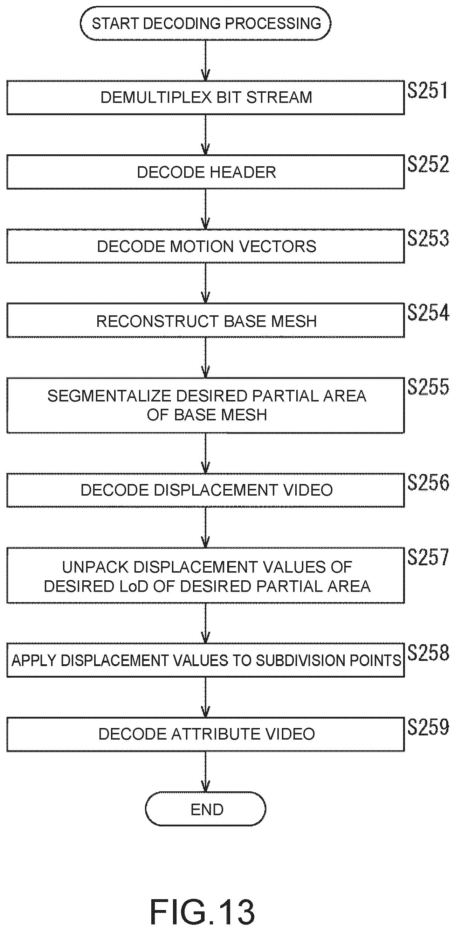

An example of the flow of the decoding processing executed by this decoding apparatus 250 will be described with reference to the flowchart of Fig. 13.

Upon start of the decoding processing, the demultiplexing unit 261 demultiplexes a bit stream and extracts various types of encoded data in Step S251.

In Step S252, the header decoding unit 262 decodes the encoded data of the header information extracted in Step S251, to generate (restore) the header information.

In Step S253, the motion vector decoding unit 263 decodes the encoded data of the motion vectors extracted in Step S251, to generate (restore) the motion vectors.

In Step S254, the base mesh reconstruction unit 264 reconstructs the current base mesh using the motion vectors and the reference base mesh.

In Step S255, the segmentation unit 265 segmentalizes a desired partial area of the current base mesh. At this time, the segmentation unit 265 may specify, on the basis of (the mesh range designation information included in) the partial area information included in the header information, a partial area corresponding to a desired range in the mesh, and segmentalize the specified partial area of the base mesh.

In Step S256, the displacement video decoding unit 266 decodes the encoded data of the displacement video extracted in Step S251, to generate (restore) (the current frame of) the displacement video.

In Step S257, the unpacking unit 267 unpacks displacement values of desired LoD of a desired partial area from the current frame (2D image). At this time, the unpacking unit 267 may unpack transformation coefficients obtained by the coefficient transform (e.g., wavelet transform) performed for each partial area and subject the transformation coefficients to the inverse coefficient transform (e.g., inverse wavelet transform) for each partial area, to thus derive the displacement values of the subdivision points. Alternatively, the unpacking unit 267 may specify, on the basis of (the intra-displacement-video range designation information included in) the partial area information included in the header information, where in the 2D image the data of a desired partial area is stored, and unpack the displacement values of the subdivision points of a desired hierarchy from the specified area.

In Step S258, the displacement value application unit 268 applies the displacement values of the subdivision points unpacked in Step S257 to the subdivision points of the base mesh segmentalized in Step S255, to generate a decoding mesh.

In Step S259, the attribute video decoding unit 269 decodes the encoded data of the attribute video extracted in Step S251, to generate (restore) the current frame of the attribute video, that is, the attribute map.

Upon ending the processing of Step S259, the decoding processing is ended.

By executing the respective processing as described above, the decoding apparatus 250 can realize the partial access function. Accordingly, the decoding apparatus 250 can suppress an increase of the processing amount of the decoding processing and suppress lowering of the encoding efficiency. In other words, the decoding apparatus 250 can improve the encoding/decoding performance.

### <4. Packing of base mesh vertex displacement value>

### <General outline of decoding processing>

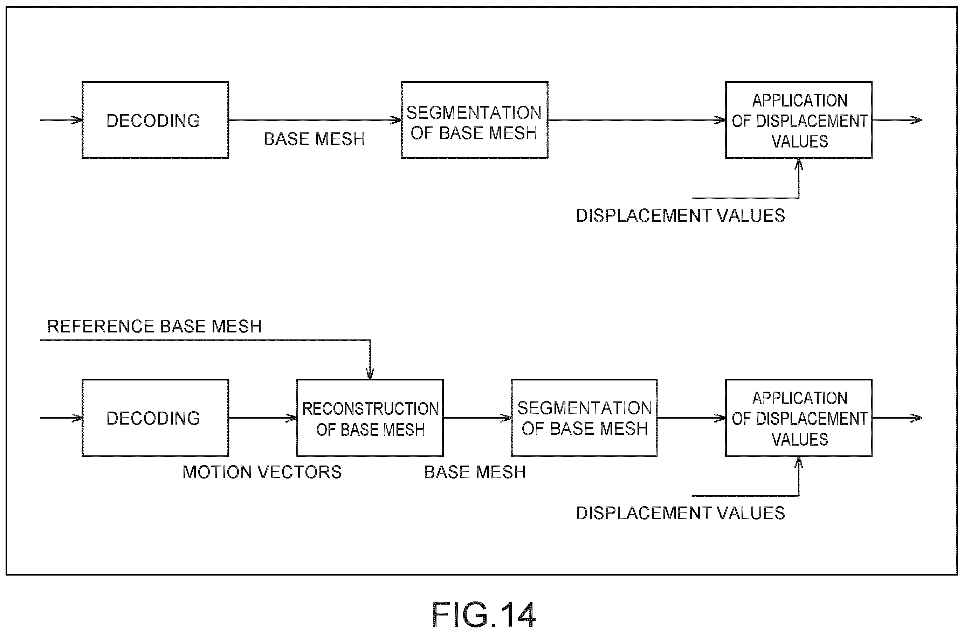

In the case of the method described in Non-Patent Literature 1, the decoding processing is performed by the flow as shown in Fig. 14. For example, when intra-coding a base mesh, the decoder decodes a bit stream to generate a base mesh, segmentalizes the base mesh, and applies displacement values to subdivision points of the segmentalized base mesh as shown on the upper side of Fig. 14. Alternatively, when inter-coding a base mesh, the decoder decodes a bit stream to generate motion vectors, applies the motion vectors to the reference base mesh to reconstruct the current base mesh, segmentalizes the current base mesh, and applies displacement values to subdivision points of the segmentalized base mesh as shown on the lower side of Fig. 14.

However, when such a method is used in intra-coding a base mesh, segmentation is performed in a base mesh containing an encoding distortion, and thus there has been a fear that displacements of the subdivision points will increase and the encoding efficiency will be lowered.

In addition, when such a method is used in inter-coding a base mesh, the motion vectors are entropy-coded for each frame, and thus it has been difficult to apply the inter coding. Thus, there has been a fear that the encoding efficiency will be lowered.

### <Method 2>

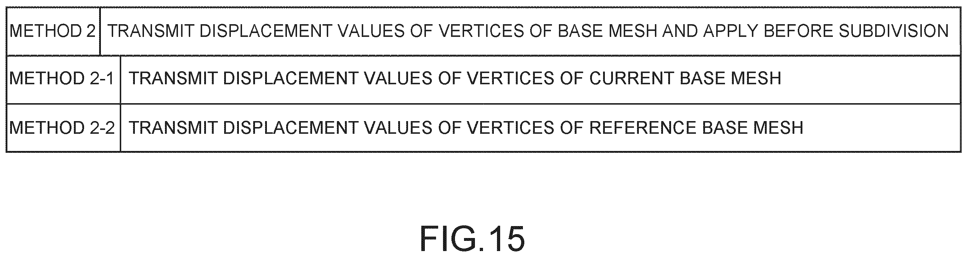

In this regard, as shown on the top row of the table shown in Fig. 15, it is possible to transmit displacement values of vertices of a base mesh and apply the displacement values before subdivision (Method 2).

For example, an information processing apparatus may include: a base mesh vertex displacement value derivation unit which derives base mesh vertex displacement values which are displacement values of vertices of a base mesh; a packing unit which hierarchizes, for each definition, displacement values of subdivision points obtained by segmentalizing the base mesh, and packs the base mesh vertex displacement values and the hierarchized displacement values of the subdivision points in a 2D image; and a displacement video encoding unit which encodes a displacement video in which the 2D image is set as a frame. It is noted that the base mesh may be generated by decimating, from an original mesh as an encoding target that is constituted of vertices and connections expressing a 3D structure of an object, the vertices. In other words, the base mesh may be a mesh which is coarser than the original mesh. Further, the displacement values of the subdivision points may be positional differences between the subdivision points and the vertices of the original mesh (corresponding to the subdivision points). Furthermore, the base mesh vertex displacement values may be positional differences between the vertices of the base mesh and the vertices of the original mesh.

Further, an information processing method may include: deriving base mesh vertex displacement values which are displacement values of vertices of a base mesh; hierarchizing, for each definition, displacement values of subdivision points obtained by segmentalizing the base mesh, and packing the base mesh vertex displacement values and the hierarchized displacement values of the subdivision points in a 2D image; and encoding a displacement video in which the 2D image is set as a frame. It is noted that the base mesh may be generated by decimating, from an original mesh as an encoding target that is constituted of vertices and connections expressing a 3D structure of an object, the vertices. In other words, the base mesh may be a mesh which is coarser than the original mesh. Further, the displacement values of the subdivision points may be positional differences between the subdivision points and the vertices of the original mesh (corresponding to the subdivision points). Furthermore, the base mesh vertex displacement values may be positional differences between the vertices of the base mesh and the vertices of the original mesh.

With such a configuration, the base mesh can be corrected using the base mesh vertex displacement values. Thus, lowering of the encoding efficiency can be suppressed.

### <Method 2-1>

When applying this Method 2, displacement values of vertices of a current base mesh may be transmitted as shown on the second row from the top in the table shown in Fig. 15 (Method 2-1). In other words, Method 2 may also be applied in intra-coding a base mesh.

For example, the information processing apparatus including the base mesh vertex displacement value derivation unit, the packing unit, and the displacement video encoding unit may further include: a base mesh encoding unit which encodes the base mesh of a current frame; and a base mesh decoding unit which decodes encoded data of the base mesh of the current frame, and the base mesh vertex displacement value derivation unit may derive, as the base mesh vertex displacement values, displacements of the vertices between the base mesh of the current frame obtained before encoding and the base mesh of the current frame that has been encoded and decoded. In other words, the displacements of the vertices due to the encoding distortion may be used as the base mesh vertex displacement values.

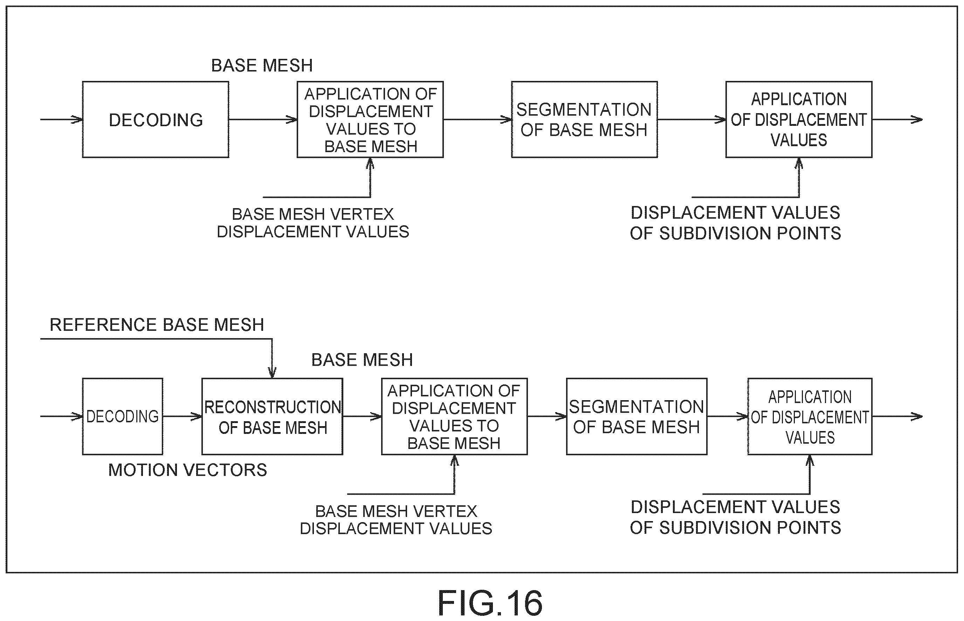

In this case, as shown on the upper side of Fig. 16, the decoder decodes a bit stream to generate a base mesh, applies the base mesh vertex displacement values to the base mesh, segmentalizes the base mesh, and applies the displacement values to subdivision points of the segmentalized base mesh.

With such a configuration, it is possible to suppress an increase of displacements of the subdivision points due to the encoding distortion and suppress lowering of the encoding efficiency.

### <Method 2-2>

When applying Method 2, displacement values of vertices of a reference base mesh may be transmitted as shown on the bottom row of the table shown in Fig. 15 (Method 2-2). In other words, Method 2 may also be applied in inter-coding a base mesh.

For example, in the information processing apparatus including the base mesh vertex displacement value derivation unit, the packing unit, and the displacement video encoding unit, the base mesh vertex displacement value derivation unit may derive, as the base mesh vertex displacement values, displacements of the vertices between the base mesh of a reference frame and the base mesh of a current frame. In other words, the displacements of the vertices between the frames (i.e., motion vectors) may be used as the base mesh vertex displacement values.

In this case, as shown on the lower side of Fig. 16, the decoder applies the base mesh vertex displacement values to the reference base mesh to reconstruct the current base mesh, segmentalizes the current base mesh, and applies the displacement values to subdivision points of the segmentalized base mesh.

With such a configuration, information of the motion vectors can be packed in the 2D image to be encoded. In other words, the inter coding for 2D encoding can be applied to the motion vectors, and lowering of the encoding efficiency can be suppressed.

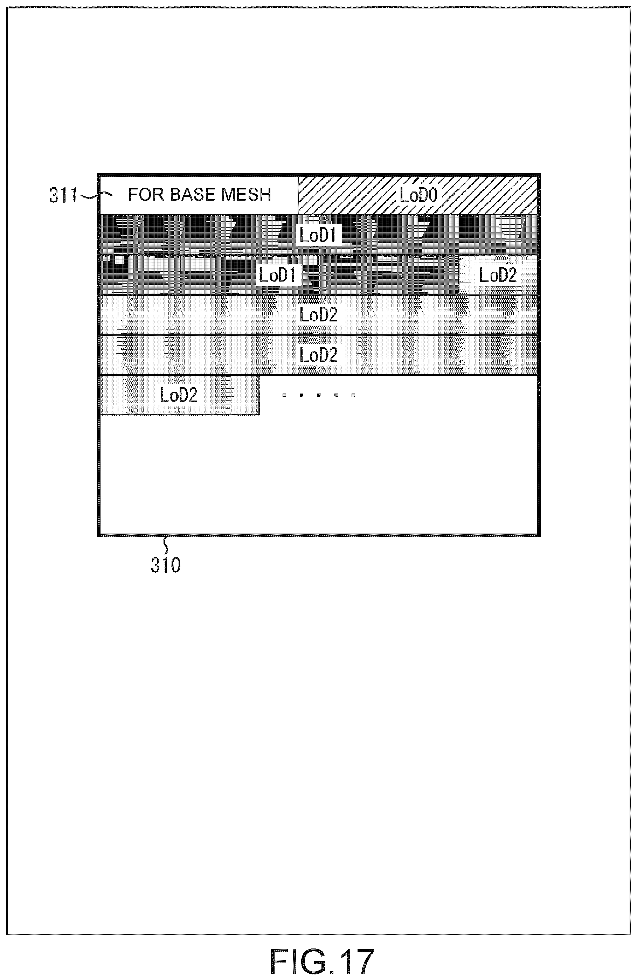

It is noted that in this case, the encoder packs the base mesh vertex displacement values in the 2D image separate from the displacement values of the subdivision points. For example, as in a 2D image 310 shown in Fig. 17, base mesh vertex displacement values 311 may be packed at a position before that of the displacement values of the subdivision points for each definition. The position at which the base mesh vertex displacement values are packed may be determined in advance, or may be an arbitrary position. When the base mesh vertex displacement values are packed at an arbitrary position of the 2D image, the encoder only needs to provide information indicating that position to the decoder side.

### <Encoding apparatus (intra)>

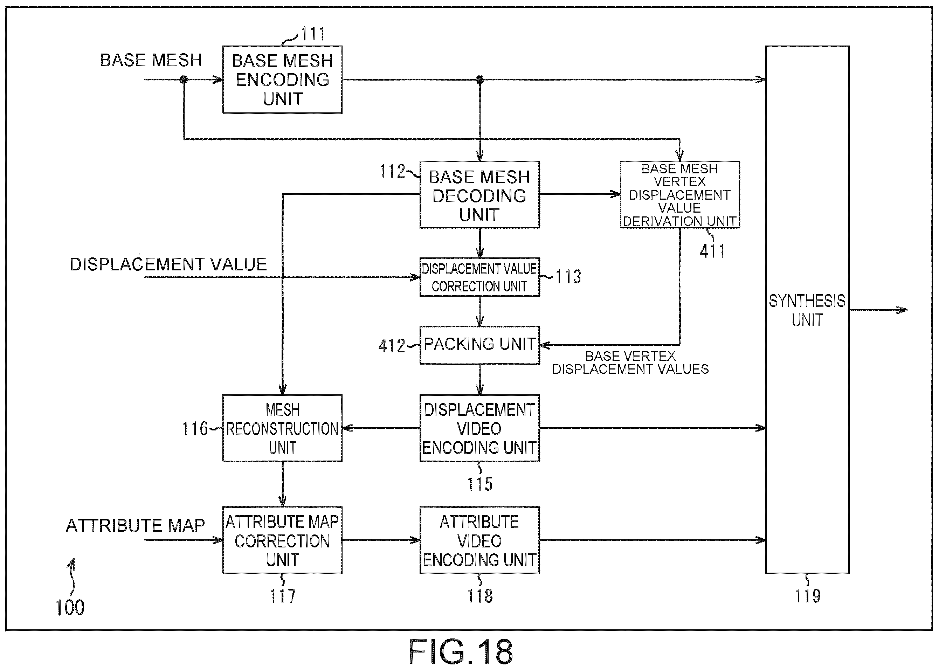

The present technology can be applied to an encoding apparatus which encodes meshes. Fig. 18 is a block diagram showing an example of a configuration of the encoding apparatus as an embodiment of the information processing apparatus to which the present technology is applied. Similar to the case shown in Fig. 6, the encoding apparatus 100 shown in Fig. 18 is an apparatus which encodes a mesh. It is noted that the encoding apparatus 100 in this case encodes a mesh by applying Method 2, Method 2-1, or Method 2-2 described above.

It is noted that Fig. 18 shows a main configuration including processing units, data flows, and the like, and not all of the configurations are shown in Fig. 18. In other words, in the encoding apparatus 100, there may be processing units that are not illustrated as blocks in Fig. 18, or there may be processing and data flows that are not indicated by arrows and the like in Fig. 18.

As shown in Fig. 18, comparing with the configuration shown in Fig. 6, the encoding apparatus 100 includes a base mesh vertex displacement value derivation unit 411 and a packing unit 412 in place of the packing unit 114.

The base mesh vertex displacement value derivation unit 411 derives the base mesh vertex displacement values on the basis of a current base mesh supplied to the encoding apparatus 100 and a base mesh (containing an encoding distortion) generated (restored) by the base mesh decoding unit 112. In other words, the base mesh vertex displacement value derivation unit 411 derives displacements of vertices due to the encoding distortion as the base mesh vertex displacement values. The base mesh vertex displacement value derivation unit 411 supplies the derived base mesh vertex displacement values to the packing unit 412.

The packing unit 412 packs, in a 2D image, displacement values of subdivision points supplied from the displacement value correction unit 113 and the base mesh vertex displacement values supplied from the base mesh vertex displacement value derivation unit 411.

At this time, the packing unit 412 may subject the displacement values of the subdivision points and the base mesh vertex displacement values to the coefficient transform (e.g., wavelet transform), and pack transformation coefficients in the 2D image. Alternatively, the packing unit 412 may quantize the displacement values of the subdivision points and the base mesh vertex displacement values (or transformation coefficients corresponding to those), and pack quantized coefficients in the 2D image.

The packing unit 412 supplies the 2D image in which the displacement values of the subdivision points and the base mesh vertex displacement values (or information corresponding thereto) are packed to the displacement video encoding unit 115.

Other processing units execute similarly to the case of the example shown in Fig. 6.

With such a configuration, the encoding apparatus 100 can suppress an increase of the displacements of the subdivision points due to the encoding distortion and suppress lowering of the encoding efficiency. In other words, the encoding apparatus 100 can improve the encoding/decoding performance.

### <Flow of encoding processing>

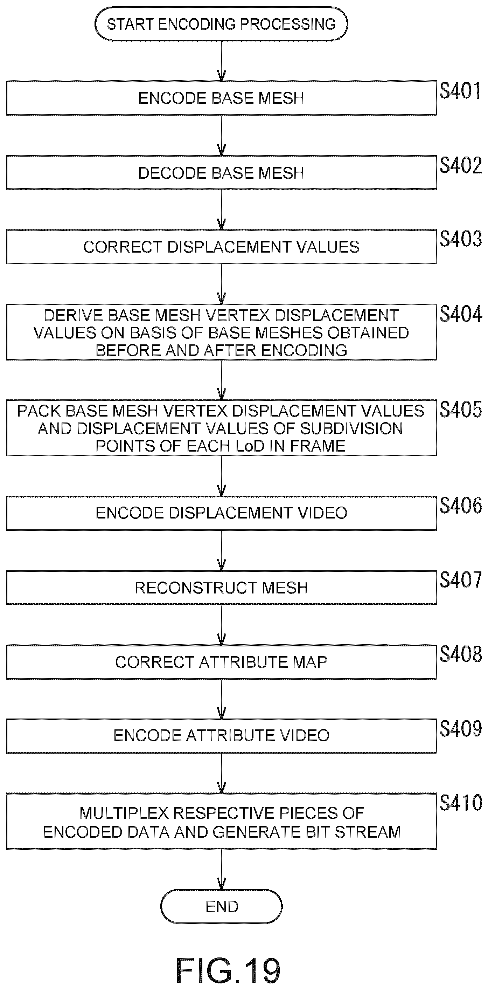

An example of the flow of the encoding processing executed by the encoding apparatus 100 in this case will be described with reference to the flowchart of Fig. 19.

Upon start of the encoding processing, processing of Steps S401 to S403 is executed similarly to the respective processing of Steps S101 to S103 shown in Fig. 7.

In Step S404, the base mesh vertex displacement value derivation unit 411 derives the base mesh vertex displacement values on the basis of current base meshes obtained before and after encoding. In other words, the base mesh vertex displacement value derivation unit 411 derives displacements of vertices due to the encoding distortion as the base mesh vertex displacement values.

In Step S405, the packing unit 114 packs the base mesh vertex displacement values derived in Step S404 and the displacement values of the subdivision points of each LoD in a frame (2D image).

Processing of Steps S406 to S410 is executed similarly to the respective processing of Steps S105 to S109 shown in Fig. 7.

Upon ending the processing of Step S410, the encoding processing is ended.

By executing the respective processing as described above, the encoding apparatus 100 can suppress an increase of the displacements of the subdivision points due to the encoding distortion and suppress lowering of the encoding efficiency. In other words, the encoding apparatus 100 can improve the encoding/decoding performance.

### <Encoding apparatus (inter)>

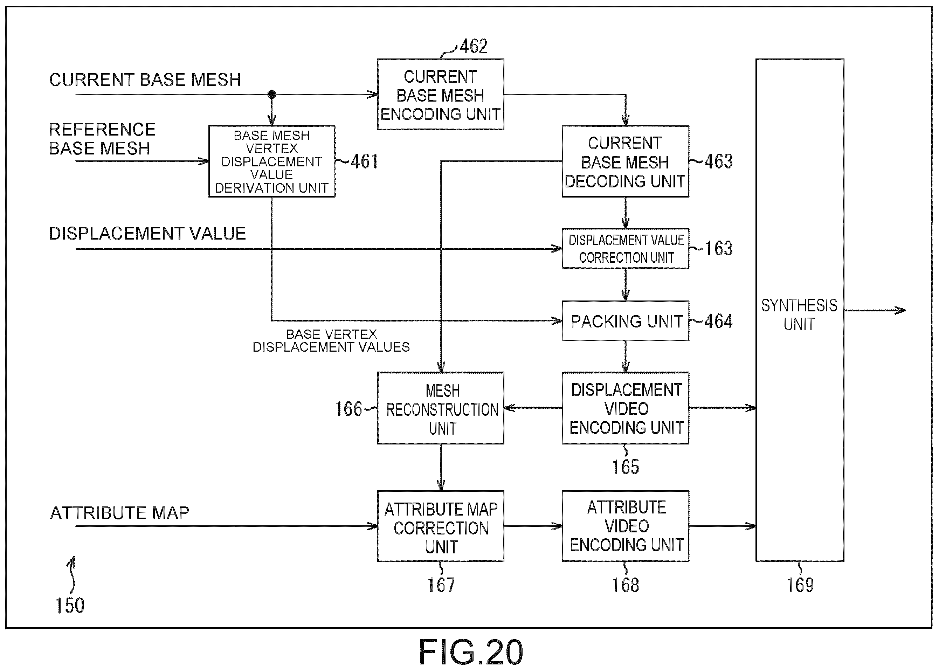

Fig. 20 is a block diagram showing an example of the configuration of the encoding apparatus as an embodiment of the information processing apparatus to which the present technology is applied. Similar to the case shown in Fig. 8, the encoding apparatus 150 shown in Fig. 20 is an apparatus which encodes a mesh. The encoding apparatus 150 encodes a mesh basically by a method similar to that of V-DMC described in Non-Patent Literature 1. It is noted that the encoding apparatus 150 encodes a mesh by applying Method 2, Method 2-1, or Method 2-2 described above.

It is noted that Fig. 20 shows a main configuration including processing units, data flows, and the like, and not all of the configurations are shown in Fig. 20. In other words, in the encoding apparatus 150, there may be processing units that are not illustrated as blocks in Fig. 20, or there may be processing and data flows that are not indicated by arrows and the like in Fig. 20.

As shown in Fig. 20, comparing with the configuration shown in Fig. 8, the encoding apparatus 150 includes a base mesh vertex displacement value derivation unit 461, a current base mesh encoding unit 462, a current base mesh decoding unit 463, and a packing unit 464 in place of the motion vector encoding unit 161, the base mesh reconstruction unit 162, and the packing unit 164.

The base mesh vertex displacement value derivation unit 461 derives the base mesh vertex displacement values on the basis of a current base mesh supplied to the encoding apparatus 150 and a reference base mesh. In other words, the base mesh vertex displacement value derivation unit 461 derives inter-frame displacements of vertices of the base mesh as the base mesh vertex displacement values. The base mesh vertex displacement value derivation unit 461 supplies the derived base mesh vertex displacement values to the packing unit 464.

The current base mesh encoding unit 462 encodes the current base mesh supplied to the encoding apparatus 150 and supplies the encoded data to the current base mesh decoding unit 463.

The current base mesh decoding unit 463 decodes the supplied encoded data of the current base mesh to generate (restore) the current base mesh. This generated current base mesh contains an encoding distortion. The current base mesh decoding unit 463 supplies the generated current base mesh (containing the encoding distortion) to the displacement value correction unit 163.

The packing unit 464 packs, in a 2D image, displacement values of subdivision points supplied from the displacement value correction unit 163 and the base mesh vertex displacement values supplied from the base mesh vertex displacement value derivation unit 461.

At this time, the packing unit 464 may subject the displacement values of the subdivision points and the base mesh vertex displacement values to the coefficient transform (e.g., wavelet transform) and pack transformation coefficients in the 2D image. Alternatively, the packing unit 464 may quantize the displacement values of the subdivision points and the base mesh vertex displacement values (or transformation coefficients corresponding to those), and pack quantized coefficients in the 2D image.

The packing unit 464 supplies the 2D image in which the displacement values of the subdivision points and the base mesh vertex displacement values (or information corresponding thereto) are packed to the displacement video encoding unit 165.

Other processing units execute similarly to the case of the example shown in Fig. 6.

With such a configuration, the encoding apparatus 150 can pack information of the motion vectors in the 2D image to be encoded. In other words, the encoding apparatus 150 can apply the inter coding for 2D encoding to the motion vectors. Accordingly, the encoding apparatus 150 can suppress lowering of the encoding efficiency. In other words, the encoding apparatus 150 can improve the encoding/decoding performance.

### <Flow of encoding processing>

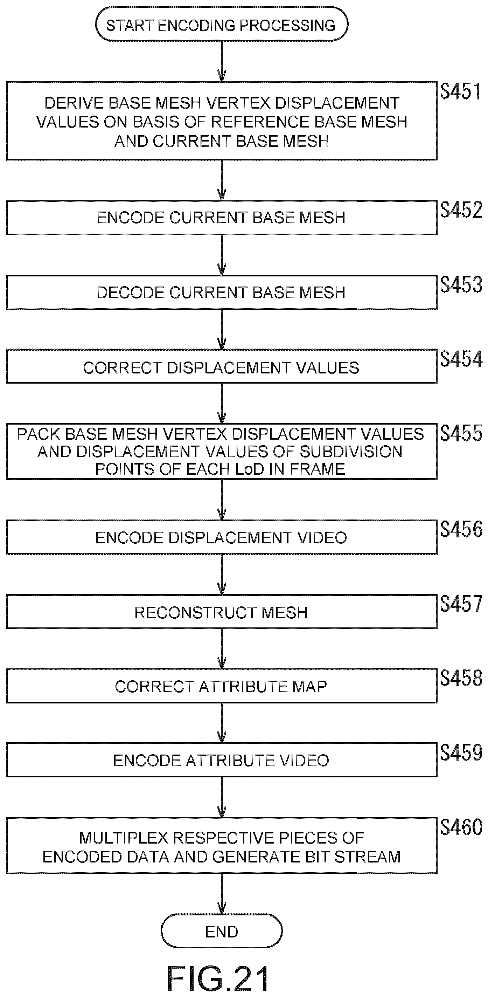

An example of the flow of the encoding processing executed by the encoding apparatus 150 in this case will be described with reference to the flowchart of Fig. 21.

Upon start of the encoding processing, in Step S451, the base mesh vertex displacement value derivation unit 461 derives the base mesh vertex displacement values on the basis of the current base mesh and the reference base mesh. In other words, the base mesh vertex displacement value derivation unit 461 derives inter-frame displacements of vertices of the base mesh as the base mesh vertex displacement values.

In Step S452, the current base mesh encoding unit 462 encodes the current base mesh.

In Step S453, the current base mesh decoding unit 463 decodes encoded data of the current base mesh generated in Step S452, to generate (restore) the current base mesh.

In Step S454, the displacement value correction unit 163 corrects the displacement values of the subdivision points using the base mesh (containing the encoding distortion) generated (restored) in Step S453.

In Step S455, the packing unit 464 packs the displacement values of the subdivision points of each LoD and the base mesh vertex displacement values in a 2D image.

Processing of Steps S456 to S460 is executed similarly to the respective processing of Steps S155 to S159 shown in Fig. 9.

Upon ending the processing of Step S460, the encoding processing is ended.

By executing the respective processing as described above, the encoding apparatus 150 can pack information of the motion vectors in the 2D image to be encoded. In other words, the encoding apparatus 150 can apply the inter coding for 2D encoding to the motion vectors. Accordingly, the encoding apparatus 150 can suppress lowering of the encoding efficiency. In other words, the encoding apparatus 150 can improve the encoding/decoding performance.

### <Method 2, Method 2-1, and Method 2-2>

It is noted that Method 2, Method 2-1, and Method 2-2 described above may also be applied to the decoding apparatus.

For example, an information processing apparatus may include: a displacement video decoding unit which decodes a bit stream and generates a displacement video in which a 2D image, in which base mesh vertex displacement values which are displacement values of vertices of a base mesh and displacement values of subdivision points obtained by segmentalizing the base mesh are packed, is set as a frame; an unpacking unit which unpacks the base mesh vertex displacement values and the displacement values of the subdivision points that have been packed in the 2D image of a current frame of the displacement video; a base mesh vertex position application unit which applies the base mesh vertex displacement values to the vertices of the base mesh; a segmentation unit which segmentalizes the base mesh in which the base mesh vertex displacement values are applied to the vertices; and a displacement value application unit which applies the displacement values of the subdivision points to the subdivision points of the segmentalized base mesh. It is noted that the base mesh may be generated by decimating, from an original mesh as an encoding target that is constituted of vertices and connections expressing a 3D structure of an object, the vertices. In other words, the base mesh may be a mesh which is coarser than the original mesh. Further, the displacement values of the subdivision points may be positional differences between the subdivision points and the vertices of the original mesh (corresponding to the subdivision points). Furthermore, the base mesh vertex displacement values may be positional differences between the vertices of the base mesh and the vertices of the original mesh.

Further, an information processing method may include: decoding a bit stream and generating a displacement video in which a 2D image, in which base mesh vertex displacement values which are displacement values of vertices of a base mesh and displacement values of subdivision points obtained by segmentalizing the base mesh are packed, is set as a frame; unpacking the base mesh vertex displacement values and the displacement values of the subdivision points that have been packed in the 2D image of a current frame of the displacement video; applying the base mesh vertex displacement values to the vertices of the base mesh; segmentalizing the base mesh in which the base mesh vertex displacement values are applied to the vertices; and applying the displacement values of the subdivision points to the subdivision points of the segmentalized base mesh. It is noted that the base mesh may be generated by decimating, from an original mesh as an encoding target that is constituted of vertices and connections expressing a 3D structure of an object, the vertices. In other words, the base mesh may be a mesh which is coarser than the original mesh. Further, the displacement values of the subdivision points may be positional differences between the subdivision points and the vertices of the original mesh (corresponding to the subdivision points). Furthermore, the base mesh vertex displacement values may be positional differences between the vertices of the base mesh and the vertices of the original mesh.

With such a configuration, the base mesh can be corrected using the base mesh vertex displacement values. Thus, lowering of the encoding efficiency can be suppressed.

Further, for example, the information processing apparatus including the displacement video decoding unit, the unpacking unit, the base mesh vertex position application unit, the segmentation unit, and the displacement value application unit may further include a base mesh decoding unit which decodes a bit stream and generates the base mesh of the current frame, and the base mesh vertex position application unit may apply the base mesh vertex displacement values to the vertices of the generated base mesh of the current frame.

With such a configuration, an increase of displacements of subdivision points due to the encoding distortion can be suppressed, and lowering of the encoding efficiency can be suppressed.

Further, for example, in the information processing apparatus including the displacement video decoding unit, the unpacking unit, the base mesh vertex position application unit, the segmentation unit, and the displacement value application unit, the base mesh vertex position application unit may apply the base mesh vertex displacement values to the vertices of the base mesh of a reference frame.

With such a configuration, information of the motion vectors can be packed in the 2D image to be encoded. In other words, the inter coding for 2D encoding can be applied to the motion vectors, and lowering of the encoding efficiency can be suppressed.

### <Decoding apparatus (intra)>

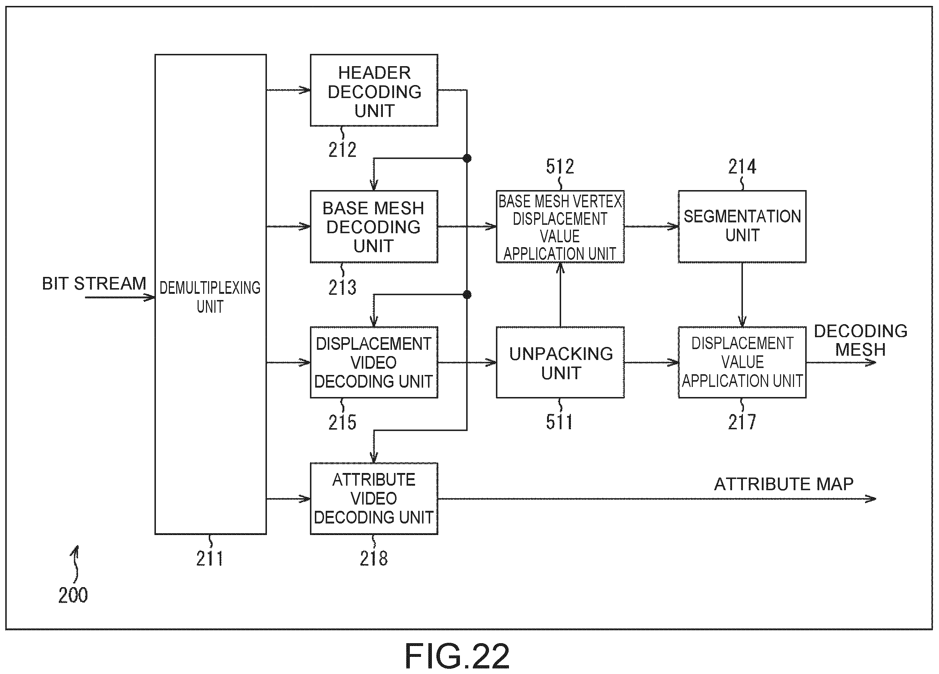

The present technology can be applied to the decoding apparatus which decodes encoded data of a mesh. Fig. 22 is a block diagram showing an example of a configuration of the decoding apparatus as an embodiment of the information processing apparatus to which the present technology is applied. Similar to the case shown in Fig. 10, the decoding apparatus 200 shown in Fig. 22 is an apparatus which decodes encoded data of a mesh. It is noted that the decoding apparatus 200 in this case decodes the encoded data of a mesh by applying Method 2, Method 2-1, or Method 2-2 described above.

It is noted that Fig. 22 shows a main configuration including processing units, data flows, and the like, and not all of the configurations are shown in Fig. 22. In other words, in the decoding apparatus 200, there may be processing units that are not illustrated as blocks in Fig. 22, or there may be processing and data flows that are not indicated by arrows and the like in Fig. 22.

As shown in Fig. 22, comparing with the configuration shown in Fig. 10, the decoding apparatus 200 includes an unpacking unit 511 and a base mesh vertex displacement value application unit 512 in place of the unpacking unit 216.

The unpacking unit 511 unpacks the base mesh vertex displacement values and the displacement values of the subdivision points from the current frame of the displacement video supplied from the displacement video decoding unit 215. At this time, the unpacking unit 511 may unpack transformation coefficients and subject the transformation coefficients to the coefficient transform (e.g., wavelet transform), to thus derive the displacement values of the subdivision points and the base mesh vertex displacement values. Alternatively, the unpacking unit 511 may unpack quantized coefficients and subject the quantized coefficients to the inverse quantization, to thus derive the displacement values of the subdivision points and the base mesh vertex displacement values. Alternatively, the unpacking unit 511 may unpack quantized coefficients, subject the quantized coefficients to the inverse quantization to derive transformation coefficients, and subject the transformation coefficients to the coefficient transform (e.g., wavelet transform), to thus derive the displacement values of the subdivision points and the base mesh vertex displacement values.

The unpacking unit 511 supplies the unpacked base mesh vertex displacement values to the base mesh vertex displacement value application unit 512. In addition, the unpacking unit 511 supplies the unpacked displacement values of the subdivision points to the displacement value application unit 217.

The base mesh vertex displacement value application unit 512 applies the base mesh vertex displacement values supplied from the unpacking unit 511 to the vertices of the current base mesh supplied from the base mesh decoding unit 213. Thus, the encoding distortion is reduced. The base mesh vertex displacement value application unit 512 supplies the processed base mesh to the segmentation unit 214.

Other processing units execute similarly to the case of the example shown in Fig. 10.

With such a configuration, the decoding apparatus 200 can suppress an increase of displacements of subdivision points due to the encoding distortion and suppress lowering of the encoding efficiency. In other words, the decoding apparatus 200 can improve the encoding/decoding performance.

### <Flow of decoding processing>

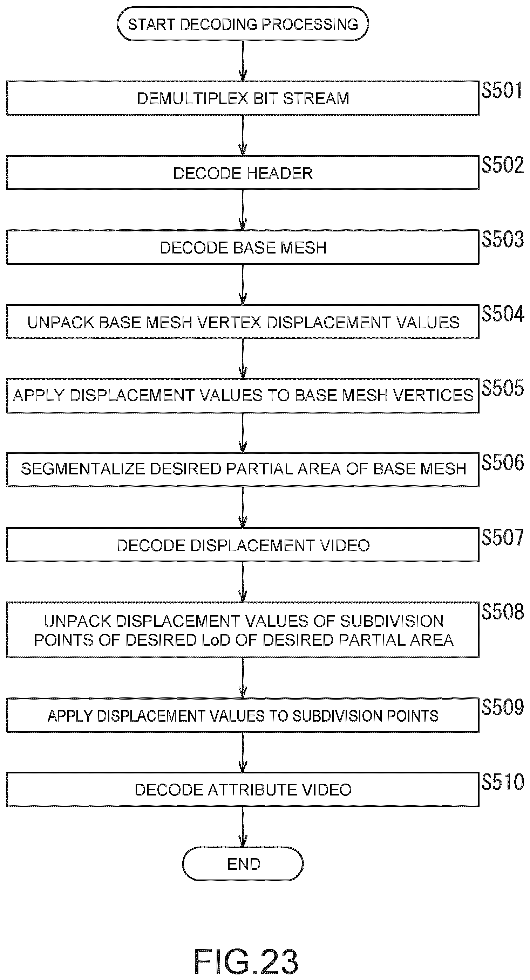

An example of the flow of the decoding processing executed by the decoding apparatus 200 in this case will be described with reference to the flowchart of Fig. 23.

Upon start of the encoding processing, processing of Steps S501 to S503 is executed similarly to the respective processing of Steps S201 to S203 shown in Fig. 11.

In Step S504, the unpacking unit 511 unpacks vertex positions of the base mesh.

In Step S505, the base mesh vertex displacement value application unit 512 applies the base mesh vertex displacement values to the vertices of the base mesh.

Processing of Steps S506 to S510 is executed similarly to the respective processing of Steps S204 to S208 shown in Fig. 7.

Upon ending the processing of Step S510, the decoding processing is ended.

By executing the respective processing as described above, the decoding apparatus 200 can suppress an increase of displacements of subdivision points due to the encoding distortion and suppress lowering of the encoding efficiency. In other words, the decoding apparatus 200 can improve the encoding/decoding performance.

### <Decoding apparatus (inter)>

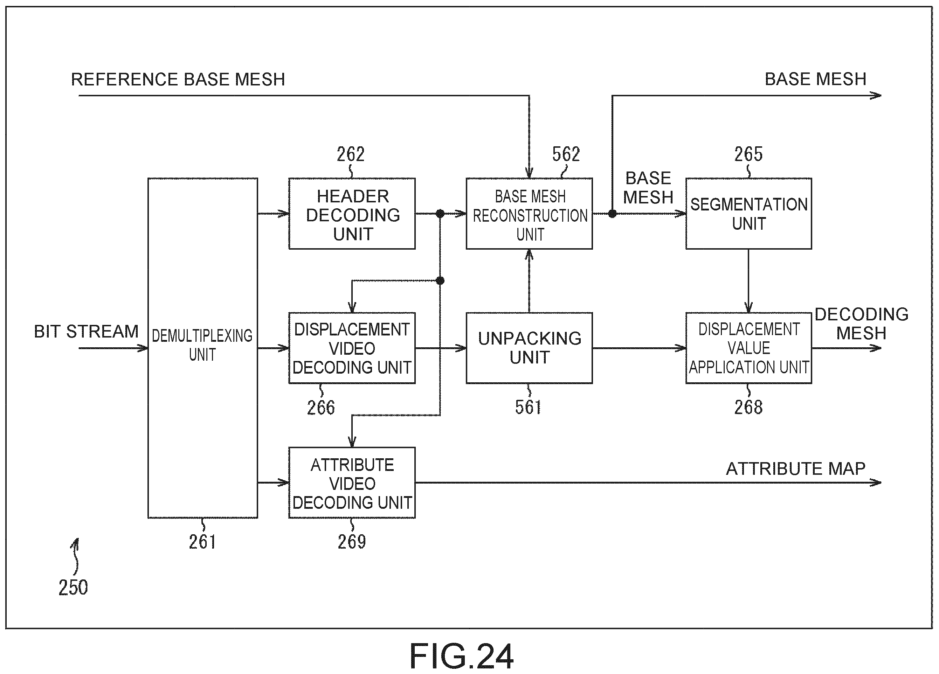

Fig. 24 is a block diagram showing an example of the configuration of the encoding apparatus as an embodiment of the information processing apparatus to which the present technology is applied. Similar to the case shown in Fig. 12, the decoding apparatus 250 shown in Fig. 24 is an apparatus which decodes encoded data of a mesh. It is noted that the decoding apparatus 250 decodes the encoded data of a mesh by applying Method 2, Method 2-1, or Method 2-2 described above.

It is noted that Fig. 24 shows a main configuration including processing units, data flows, and the like, and not all of the configurations are shown in Fig. 24. In other words, in the decoding apparatus 250, there may be processing units that are not illustrated as blocks in Fig. 24, or there may be processing and data flows that are not indicated by arrows and the like in Fig. 24.

As shown in Fig. 24, comparing with the configuration shown in Fig. 12, the decoding apparatus 250 includes an unpacking unit 561 and a base mesh reconstruction unit 562 in place of the motion vector decoding unit 263, the base mesh reconstruction unit 264, and the unpacking unit 267.

The unpacking unit 561 unpacks the base mesh vertex displacement values and the displacement values of the subdivision points from the current frame of the displacement video supplied from the displacement video decoding unit 266. At this time, the unpacking unit 561 may unpack transformation coefficients and subject the transformation coefficients to the coefficient transform (e.g., wavelet transform), to thus derive the displacement values of the subdivision points and the base mesh vertex displacement values. Alternatively, the unpacking unit 561 may unpack quantized coefficients and subject the quantized coefficients to the inverse quantization, to thus derive the displacement values of the subdivision points and the base mesh vertex displacement values. Alternatively, the unpacking unit 561 may unpack quantized coefficients, subject the quantized coefficients to the inverse quantization to derive transformation coefficients, and subject the transformation coefficients to the coefficient transform (e.g., wavelet transform), to thus derive the displacement values of the subdivision points and the base mesh vertex displacement values.

The unpacking unit 561 supplies the unpacked base mesh vertex displacement values to the base mesh reconstruction unit 562. In addition, the unpacking unit 561 supplies the unpacked displacement values of the subdivision points to the displacement value application unit 268.

The base mesh reconstruction unit 562 applies the base mesh vertex displacement values supplied from the unpacking unit 561 to the vertices of the reference base mesh. Thus, the current base mesh is reconstructed. The base mesh reconstruction unit 562 supplies the reconstructed current base mesh to the segmentation unit 265.

Other processing units execute similarly to the case of the example shown in Fig. 12.

With such a configuration, the decoding apparatus 250 can pack information of the motion vectors in the 2D image to be encoded. In other words, the decoding apparatus 250 can apply the inter coding for 2D encoding to the motion vectors. Accordingly, the decoding apparatus 250 can suppress lowering of the encoding efficiency. In other words, the decoding apparatus 250 can improve the encoding/decoding performance.

### <Flow of decoding processing>

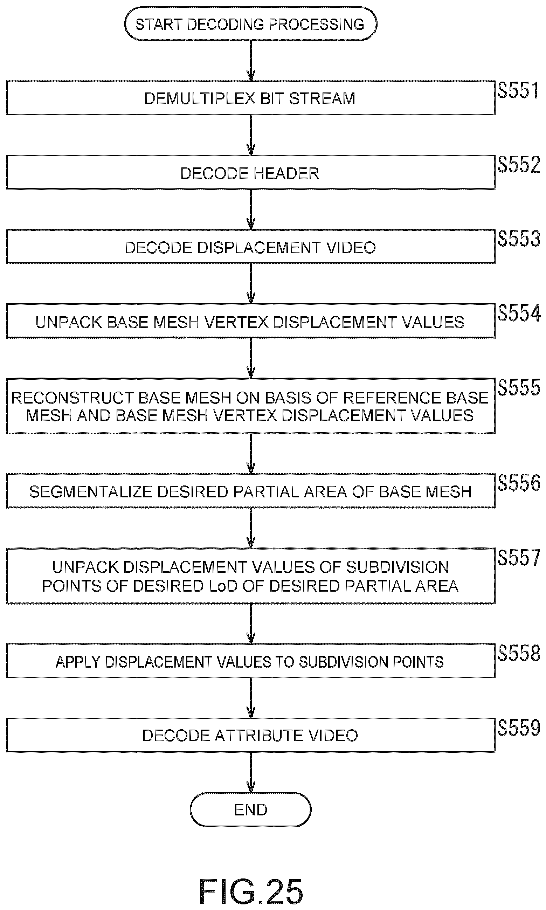

An example of the flow of the decoding processing executed by the decoding apparatus 250 in this case will be described with reference to the flowchart of Fig. 25.

Upon start of the decoding processing, processing of Steps S551 to S553 is executed similarly to the respective processing of Steps S251, S252, and S256 shown in Fig. 13.

In Step S554, the unpacking unit 561 unpacks vertex positions of the base mesh.

In Step S555, the base mesh reconstruction unit 562 applies the base mesh vertex displacement values to the vertices of the reference base mesh, to reconstruct the current base mesh.

Processing of Steps S556 to S559 is executed similarly to the respective processing of Steps S255 and S257 to S259 shown in Fig. 13.

Upon ending the processing of Step S560, the decoding processing is ended.

By executing the respective processing as described above, the decoding apparatus 250 can pack information of the motion vectors in the 2D image to be encoded. In other words, the decoding apparatus 250 can apply the inter coding for 2D encoding to the motion vectors. Accordingly, the decoding apparatus 250 can suppress lowering of the encoding efficiency. In other words, the decoding apparatus 250 can improve the encoding/decoding performance.

### <5. Notes>

### <Computer>

The series of processing described above can be executed by hardware or can be executed by software. When the series of processing is executed by software, a program configuring the software is installed in a computer. Herein, the computer includes a computer incorporated into dedicated hardware, a computer such as a general-purpose personal computer, for example, that is capable of installing various programs therein to execute various functions, and the like.

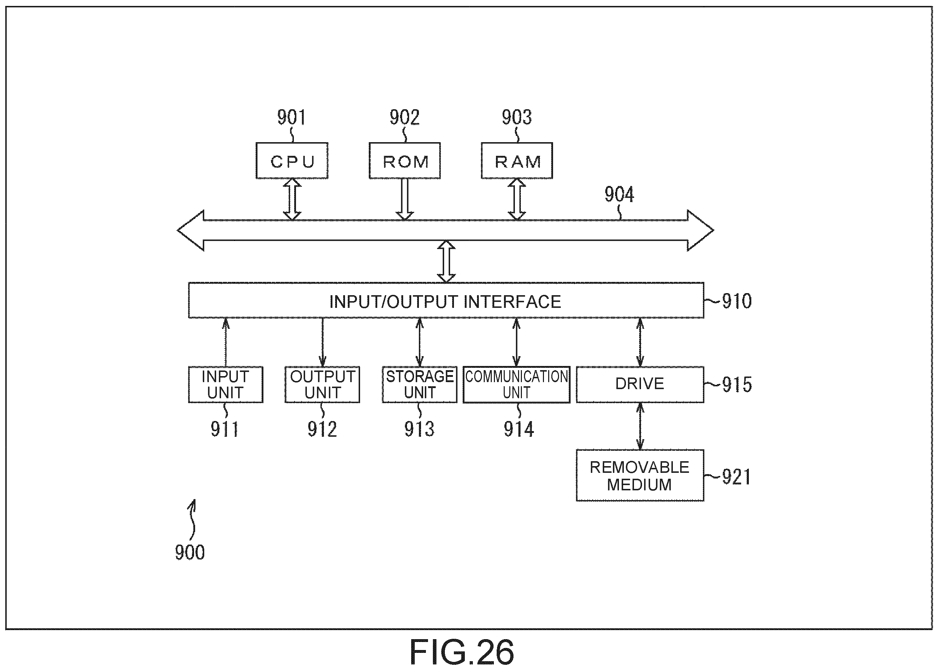

Fig. 26 is a block diagram showing a hardware configuration example of a computer that executes the series of processing described above by a program.

In a computer 900 shown in Fig. 26, a CPU (Central Processing Unit) 901, a ROM (Read Only Memory) 902, and a RAM (Random Access Memory) 903 are mutually connected via a bus 904.

An input/output interface 910 is also connected to the bus 904. Connected to the input/output interface 910 are an input unit 911, an output unit 912, a storage unit 913, a communication unit 914, and a drive 915.

The input unit 911 is constituted of, for example, a keyboard, a mouse, a microphone, a touch panel, an input terminal, and the like. The output unit 912 is constituted of, for example, a display, a speaker, an output terminal, and the like. The storage unit 913 is constituted of, for example, a hard disk, a RAM disk, a nonvolatile memory, and the like. The communication unit 914 is constituted of, for example, a network interface. The drive 915 drives a removable medium 921 such as a magnetic disc, an optical disc, a magneto optical disc, or a semiconductor memory.

In the computer configured as described above, the CPU 901 loads a program stored in the storage unit 913 into the RAM 903 via the input/output interface 910 and the bus 904 and executes it, to carry out the series of processing described above, for example. Data required for the CPU 901 to execute various types of processing, and the like are also stored in the RAM 903 as appropriate.

The program executed by the computer can be applied by being recorded onto the removable medium 921 as a package medium or the like, for example. In that case, the program can be installed in the storage unit 913 via the input/output interface 910 by loading the removable medium 921 into the drive 915.

Further, this program can also be provided via wired or wireless transmission media such as a local area network, the Internet, and digital satellite broadcasting. In that case, the program can be received by the communication unit 914 to be installed in the storage unit 913.

Alternatively, this program can be installed in advance in the ROM 902 or the storage unit 913.

### <Application target of present technology>

The present technology can be applied to arbitrary configurations. For example, the present technology may be applied to various electronic apparatuses.

Moreover, for example, the present technology can be executed as a partial configuration of an apparatus, such as a processor as a system LSI (Large Scale Integration) or the like (e.g., video processor), a module that uses a plurality of processors and the like (e.g., video module), a unit that uses a plurality of modules and the like (e.g., video unit), or a set obtained by adding other functions to the unit (e.g., video set).

Further, for example, the present technology can also be applied to a network system constituted of a plurality of apparatuses. For example, the present technology may be executed as cloud computing in which a plurality of apparatuses share and cooperate to process via a network. For example, the present technology may be executed in, for example, a cloud service that provides a service related to images (moving images) to an arbitrary terminal such as a computer, an AV (Audio Visual) apparatus, a mobile information processing terminal, and an IoT (Internet of Things) device.

It is noted that in the present specification, the system refers to an aggregation of a plurality of constituent elements (apparatuses, modules (components), and the like), and whether or not all of the constituent elements are within the same housing is irrelevant. Accordingly, a plurality of apparatuses that are housed in separate housings and are connected via a network and a single apparatus in which a plurality of modules are housed in a single housing are both systems.

### <Fields/uses to which present technology can be applied>

The systems, apparatuses, processing units, and the like to which the present technology is applied can be used in arbitrary fields of, for example, traffic, medical care, crime prevention, agriculture, livestock business, mining, beauty care, industrial plants, home electrical appliance, weather, natural surveillance, and the like. In addition, uses thereof are also arbitrary.

### <Others>

It is noted that "flag" used in the present specification is information for identifying a plurality of states and includes not only information used when identifying two states of true (1) and false (0) but also information with which three or more states can be identified. Accordingly, values that this "flag" may take may be, for example, binary as in 1/0 or ternary or more. In other words, a bit count configuring this "flag" is arbitrary and may be 1 bit or a plurality of bits. Further, since identification information (including the flag) may take not only a form in which the identification information is incorporated in a bit stream but also a form in which differential information of the identification information with respect to certain information that becomes a reference is incorporated in a bit stream, in the present specification, the "flag" or "identification information" includes not only that information but also differential information with respect to information that becomes a reference.

In addition, various types of information (metadata etc.) related to encoded data (bit stream) may be transmitted or recorded in any form as long as the information is associated with the encoded data. Herein, the term "associate" means enabling, when processing one of the data, the other data to be used (to be linked). In other words, the data associated with each other may be compiled as one piece of data or may each be regarded as individual data. For example, information associated with encoded data (image) may be transmitted on a transmission path different from that of the encoded data (image). Further, for example, information associated with encoded data (image) may be recorded on a recording medium different from that of the encoded data (image) (or in a different recording area in the same recording medium). It is noted that this "associate" may be applied to not only the entire data but also a part of the data. For example, an image and information corresponding to the image may be associated with each other in an arbitrary unit including a plurality of frames, one frame, one portion in a frame, or the like.

It is noted that in the present specification, the terms "synthesize", "multiplex", "add", "integrate", "incorporate", "store", "put into", "inset", "insert", and the like mean compiling a plurality of objects into one, such as compiling encoded data and metadata into one piece of data, for example, and refer to one method of "associate" described above.

Further, embodiments of the present technology are not limited to the embodiments described above and can be variously modified without departing from the gist of the present technology.

For example, the configuration described as one apparatus (or processing unit) may be divided to be configured as a plurality of apparatuses (or processing units). Conversely, the configuration described above as a plurality of apparatuses (or processing units) may collectively be configured as one apparatus (or processing unit). Furthermore, configurations other than those described above may of course be added to the configurations of the respective apparatuses (or the respective processing units). In addition, as long as configurations and operations as the entire system are substantially the same, a part of a configuration of a certain apparatus (or processing unit) may be incorporated into a configuration of another apparatus (or another processing unit).

Furthermore, for example, the program described above may be executed in an arbitrary apparatus. In that case, the apparatus only needs to have necessary functions (functional blocks etc.) so as to be capable of acquiring necessary information.

Moreover, for example, respective steps of a single flowchart may be executed by a single apparatus, or may be shared by a plurality of apparatuses to be executed. In addition, when a plurality of processing is included in a single step, the plurality of processing may be executed by a single apparatus, or may be shared by a plurality of apparatuses to be executed. In other words, the plurality of processing included in a single step can be executed as processing of a plurality of steps. Conversely, processing described as a plurality of steps can collectively be executed as a single step.

Furthermore, for example, regarding the program executed by the computer, the processing of the steps describing the program may be executed in time series in the order described in the present specification, or may be executed individually in parallel at necessary timings, such as when invoked. In other words, as long as no contradiction is caused, the processing of the respective steps may be executed in an order different from the order described above. In addition, the processing of the steps describing the program may be executed in parallel with processing of other programs, or may be executed in combination with the processing of other programs.

Further, for example, as long as no contradiction is caused, the plurality of technologies related to the present technology can each be executed independently and individually. Of course, a plurality of arbitrary present technologies can be executed in combination. For example, a part or all of the present technology described in any of the embodiments can be executed in combination with a part or all of the present technology described in the other embodiments. Moreover, a part or all of the arbitrary present technology described above can be executed in combination with other technologies not described above.

It is noted that the present technology can also take the following configurations.
(1) An information processing apparatus, including:
   a packing unit which hierarchizes, for each definition, displacement values of subdivision points obtained by segmentalizing a base mesh, and packs the hierarchized displacement values of the subdivision points in a 2D image for each of partial areas of an object; and
   a displacement video encoding unit which encodes a displacement video in which the 2D image is set as a frame, in which
   the base mesh is generated by decimating, from an original mesh as an encoding target that is constituted of vertices and connections expressing a 3D structure of the object, the vertices, and is a mesh which is coarser than the original mesh, and
   the displacement values are positional differences between the subdivision points and the vertices of the original mesh.
(2) The information processing apparatus according to (1), in which
   the packing unit wavelet-transforms the displacement values of the subdivision points for each of the partial areas, and packs transformation coefficients obtained resultantly in the 2D image.
(3) The information processing apparatus according to (1) or (2), in which
   the displacement video encoding unit further encodes partial area information, and
   the partial area information includes mesh range designation information that indicates a range of the partial area in the mesh and intra-displacement-video range designation information that indicates a range of the partial area in the 2D image of the displacement video.
(4) The information processing apparatus according to any one of (1) to (3), further including:
   a base mesh encoding unit which encodes the base mesh of a current frame.
(5) The information processing apparatus according to any one of (1) to (3), further including:
   a motion vector encoding unit which encodes a motion vector of the vertices of the base mesh of a current frame that uses the base mesh of a reference frame as a reference.
(6) An information processing method, including:
   hierarchizing, for each definition, displacement values of subdivision points obtained by segmentalizing a base mesh, and packing the hierarchized displacement values of the subdivision points in a 2D image for each of partial areas of an object; and
   encoding a displacement video in which the 2D image is set as a frame, in which
   the base mesh is generated by decimating, from an original mesh as an encoding target that is constituted of vertices and connections expressing a 3D structure of the object, the vertices, and is a mesh which is coarser than the original mesh, and
   the displacement values are positional differences between the subdivision points and the vertices of the original mesh.
(11) An information processing apparatus, including:
   a displacement video decoding unit which decodes a bit stream and generates a displacement video in which a 2D image, in which displacement values of subdivision points obtained by segmentalizing a base mesh are hierarchized for each definition and packed for each of partial areas of an object, is set as a frame;
   an unpacking unit which unpacks the displacement values of the subdivision points of a desired hierarchy of a desired partial area, that have been packed in the 2D image of a current frame of the displacement video;
   a segmentation unit which segmentalizes the base mesh of the current frame; and
   a displacement value application unit which applies the displacement values of the subdivision points to the subdivision points of the segmentalized base mesh, in which
   the base mesh is generated by decimating, from an original mesh as an encoding target that is constituted of vertices and connections expressing a 3D structure of the object, the vertices, and is a mesh which is coarser than the original mesh, and
   the displacement values are positional differences between the subdivision points and the vertices of the original mesh.
(12) The information processing apparatus according to (11), in which
   transformation coefficients obtained by wavelet-transforming the displacement values of the subdivision points for each of the partial areas are packed in the 2D image, and
   the unpacking unit unpacks the transformation coefficient of a desired hierarchy of a desired partial area and subjects the transformation coefficient to inverse wavelet transform, to thus generate the displacement values of the subdivision points.
(13) The information processing apparatus according to (11) or (12), further including:
   a header decoding unit which decodes a bit stream and generates partial area information including mesh range designation information that indicates a range of the partial area in the mesh and intra-displacement-video range designation information that indicates a range of the partial area in the 2D image of the displacement video, in which
   the unpacking unit unpacks the displacement values of the subdivision points of a desired hierarchy of a desired partial area on the basis of the intra-displacement-video range designation information, and
   the segmentation unit segmentalizes a desired partial area of the base mesh on the basis of the mesh range designation information.
(14) The information processing apparatus according to any one of (11) to (13), further including:
   a base mesh decoding unit which decodes a bit stream and generates the base mesh of the current frame.
(15) The information processing apparatus according to any one of (11) to (13), further including:
   a motion vector generation unit which decodes a bit stream and generates a motion vector; and
   a base mesh reconstruction unit which applies the motion vector to the vertices of the base mesh of a reference frame to reconstruct the base mesh of the current frame.
(16) An information processing method, including:
   decoding a bit stream and generating a displacement video in which a 2D image, in which displacement values of subdivision points obtained by segmentalizing a base mesh are hierarchized for each definition and packed for each of partial areas of an object, is set as a frame;
   unpacking the displacement values of the subdivision points of a desired hierarchy of a desired partial area, that have been packed in the 2D image of a current frame of the displacement video;
   segmentalizing the base mesh of the current frame; and
   applying the displacement values of the subdivision points to the subdivision points of the segmentalized base mesh, in which
   the base mesh is generated by decimating, from an original mesh as an encoding target that is constituted of vertices and connections expressing a 3D structure of the object, the vertices, and is a mesh which is coarser than the original mesh, and
   the displacement values are positional differences between the subdivision points and the vertices of the original mesh.
(21) An information processing apparatus, including:
   a base mesh vertex displacement value derivation unit which derives base mesh vertex displacement values which are displacement values of vertices of a base mesh;
   a packing unit which hierarchizes, for each definition, displacement values of subdivision points obtained by segmentalizing the base mesh, and packs the base mesh vertex displacement values and the hierarchized displacement values of the subdivision points in a 2D image; and
   a displacement video encoding unit which encodes a displacement video in which the 2D image is set as a frame, in which
   the base mesh is generated by decimating, from an original mesh as an encoding target that is constituted of vertices and connections expressing a 3D structure of an object, the vertices, and is a mesh which is coarser than the original mesh,
   the displacement values of the subdivision points are positional differences between the subdivision points and the vertices of the original mesh, and
   the base mesh vertex displacement values are positional differences between the vertices of the base mesh and the vertices of the original mesh.
(22) The information processing apparatus according to (21), further including:
   a base mesh encoding unit which encodes the base mesh of a current frame; and
   a base mesh decoding unit which decodes encoded data of the base mesh of the current frame, in which
   the base mesh vertex displacement value derivation unit derives, as the base mesh vertex displacement values, displacements of the vertices between the base mesh of the current frame obtained before encoding and the base mesh of the current frame that has been encoded and decoded.
(23) The information processing apparatus according to (21), in which
   the base mesh vertex displacement value derivation unit derives, as the base mesh vertex displacement values, displacements of the vertices between the base mesh of a reference frame and the base mesh of a current frame.
(24) An information processing method, including:
   deriving base mesh vertex displacement values which are displacement values of vertices of a base mesh;
   hierarchizing, for each definition, displacement values of subdivision points obtained by segmentalizing the base mesh, and packing the base mesh vertex displacement values and the hierarchized displacement values of the subdivision points in a 2D image; and
   encoding a displacement video in which the 2D image is set as a frame, in which
   the base mesh is generated by decimating, from an original mesh as an encoding target that is constituted of vertices and connections expressing a 3D structure of an object, the vertices, and is a mesh which is coarser than the original mesh,
   the displacement values of the subdivision points are positional differences between the subdivision points and the vertices of the original mesh, and
   the base mesh vertex displacement values are positional differences between the vertices of the base mesh and the vertices of the original mesh.
(31) An information processing apparatus, including:
   a displacement video decoding unit which decodes a bit stream and generates a displacement video in which a 2D image, in which base mesh vertex displacement values which are displacement values of vertices of a base mesh and displacement values of subdivision points obtained by segmentalizing the base mesh are packed, is set as a frame;
   an unpacking unit which unpacks the base mesh vertex displacement values and the displacement values of the subdivision points that have been packed in the 2D image of a current frame of the displacement video;
   a base mesh vertex position application unit which applies the base mesh vertex displacement values to the vertices of the base mesh;
   a segmentation unit which segmentalizes the base mesh in which the base mesh vertex displacement values are applied to the vertices; and
   a displacement value application unit which applies the displacement values of the subdivision points to the subdivision points of the segmentalized base mesh, in which
   the base mesh is generated by decimating, from an original mesh as an encoding target that is constituted of vertices and connections expressing a 3D structure of an object, the vertices, and is a mesh which is coarser than the original mesh,
   the displacement values of the subdivision points are positional differences between the subdivision points and the vertices of the original mesh, and
   the base mesh vertex displacement values are positional differences between the vertices of the base mesh and the vertices of the original mesh.
(32) The information processing apparatus according to (31), further including:
   a base mesh decoding unit which decodes a bit stream and generates the base mesh of the current frame, in which
   the base mesh vertex position application unit applies the base mesh vertex displacement values to the vertices of the generated base mesh of the current frame.
(33) The information processing apparatus according to (31), in which
   the base mesh vertex position application unit applies the base mesh vertex displacement values to the vertices of the base mesh of a reference frame.
(34) An information processing method, including:
   decoding a bit stream and generating a displacement video in which a 2D image, in which base mesh vertex displacement values which are displacement values of vertices of a base mesh and displacement values of subdivision points obtained by segmentalizing the base mesh are packed, is set as a frame;
   unpacking the base mesh vertex displacement values and the displacement values of the subdivision points that have been packed in the 2D image of a current frame of the displacement video;
   applying the base mesh vertex displacement values to the vertices of the base mesh;
   segmentalizing the base mesh in which the base mesh vertex displacement values are applied to the vertices; and
   applying the displacement values of the subdivision points to the subdivision points of the segmentalized base mesh, in which
   the base mesh is generated by decimating, from an original mesh as an encoding target that is constituted of vertices and connections expressing a 3D structure of an object, the vertices, and is a mesh which is coarser than the original mesh,
   the displacement values of the subdivision points are positional differences between the subdivision points and the vertices of the original mesh, and
   the base mesh vertex displacement values are positional differences between the vertices of the base mesh and the vertices of the original mesh.

### Reference Signs List

- 100: encoding apparatus

- 111: base mesh encoding unit
- 112: base mesh decoding unit
- 113: displacement value correction unit
- 114: packing unit
- 115: displacement video encoding unit
- 116: mesh reconstruction unit
- 117: attribute map correction unit
- 118: attribute video encoding unit
- 119: synthesis unit
- 150: encoding apparatus
- 161: motion vector encoding unit
- 162: base mesh reconstruction unit
- 163: displacement value correction unit
- 164: packing unit
- 165: displacement video encoding unit
- 166: mesh reconstruction unit
- 167: attribute map correction unit
- 168: attribute video encoding unit
- 169: synthesis unit
- 200: decoding apparatus
- 211: demultiplexing unit
- 212: header decoding unit
- 213: base mesh decoding unit
- 214: segmentation unit
- 215: displacement video decoding unit
- 216: unpacking unit
- 217: displacement value application unit
- 218: attribute video decoding unit
- 250: decoding apparatus
- 261: demultiplexing unit
- 262: header decoding unit
- 263: motion vector decoding unit
- 264: base mesh reconstruction unit
- 265: segmentation unit
- 266: displacement video decoding unit
- 267: unpacking unit
- 268: displacement value application unit
- 269: attribute video decoding unit
- 411: base mesh vertex displacement value derivation unit
- 412: packing unit
- 461: base mesh vertex displacement value derivation unit
- 462: current base mesh encoding unit
- 463: current base mesh decoding unit
- 464: packing unit
- 511: unpacking unit
- 512: base mesh vertex displacement value application unit
- 561: unpacking unit
- 562: base mesh reconstruction unit
- 900: computer

## Claims

1. An information processing apparatus, comprising:
a packing unit which hierarchizes, for each definition, displacement values of subdivision points obtained by segmentalizing a base mesh, and packs the hierarchized displacement values of the subdivision points in a 2D image for each of partial areas of an object; and
a displacement video encoding unit which encodes a displacement video in which the 2D image is set as a frame, wherein
the base mesh is generated by decimating, from an original mesh as an encoding target that is constituted of vertices and connections expressing a 3D structure of the object, the vertices, and is a mesh which is coarser than the original mesh, and
the displacement values are positional differences between the subdivision points and the vertices of the original mesh.

2. The information processing apparatus according to claim 1, wherein
the packing unit wavelet-transforms the displacement values of the subdivision points for each of the partial areas, and packs transformation coefficients obtained resultantly in the 2D image.

3. The information processing apparatus according to claim 1, wherein
the displacement video encoding unit further encodes partial area information, and
the partial area information includes mesh range designation information that indicates a range of the partial area in the mesh and intra-displacement-video range designation information that indicates a range of the partial area in the 2D image of the displacement video.

4. The information processing apparatus according to claim 1, further comprising:
a base mesh encoding unit which encodes the base mesh of a current frame.

5. The information processing apparatus according to claim 1, further comprising:
a motion vector encoding unit which encodes a motion vector of the vertices of the base mesh of a current frame that uses the base mesh of a reference frame as a reference.

6. An information processing method, comprising:
hierarchizing, for each definition, displacement values of subdivision points obtained by segmentalizing a base mesh, and packing the hierarchized displacement values of the subdivision points in a 2D image for each of partial areas of an object; and
encoding a displacement video in which the 2D image is set as a frame, wherein
the base mesh is generated by decimating, from an original mesh as an encoding target that is constituted of vertices and connections expressing a 3D structure of the object, the vertices, and is a mesh which is coarser than the original mesh, and
the displacement values are positional differences between the subdivision points and the vertices of the original mesh.

7. An information processing apparatus, comprising:
a displacement video decoding unit which decodes a bit stream and generates a displacement video in which a 2D image, in which displacement values of subdivision points obtained by segmentalizing a base mesh are hierarchized for each definition and packed for each of partial areas of an object, is set as a frame;
an unpacking unit which unpacks the displacement values of the subdivision points of a desired hierarchy of a desired partial area, that have been packed in the 2D image of a current frame of the displacement video;
a segmentation unit which segmentalizes the base mesh of the current frame; and
a displacement value application unit which applies the displacement values of the subdivision points to the subdivision points of the segmentalized base mesh, wherein
the base mesh is generated by decimating, from an original mesh as an encoding target that is constituted of vertices and connections expressing a 3D structure of the object, the vertices, and is a mesh which is coarser than the original mesh, and
the displacement values are positional differences between the subdivision points and the vertices of the original mesh.

8. The information processing apparatus according to claim 7, wherein
transformation coefficients obtained by wavelet-transforming the displacement values of the subdivision points for each of the partial areas are packed in the 2D image, and
the unpacking unit unpacks the transformation coefficient of a desired hierarchy of a desired partial area and subjects the transformation coefficient to inverse wavelet transform, to thus generate the displacement values of the subdivision points.

9. The information processing apparatus according to claim 7, further comprising:
a header decoding unit which decodes a bit stream and generates partial area information including mesh range designation information that indicates a range of the partial area in the mesh and intra-displacement-video range designation information that indicates a range of the partial area in the 2D image of the displacement video, wherein
the unpacking unit unpacks the displacement values of the subdivision points of a desired hierarchy of a desired partial area on a basis of the intra-displacement-video range designation information, and
the segmentation unit segmentalizes a desired partial area of the base mesh on a basis of the mesh range designation information.

10. The information processing apparatus according to claim 7, further comprising:
a base mesh decoding unit which decodes a bit stream and generates the base mesh of the current frame.

11. The information processing apparatus according to claim 7, further comprising:
a motion vector generation unit which decodes a bit stream and generates a motion vector; and
a base mesh reconstruction unit which applies the motion vector to the vertices of the base mesh of a reference frame to reconstruct the base mesh of the current frame.

12. An information processing method, comprising:
decoding a bit stream and generating a displacement video in which a 2D image, in which displacement values of subdivision points obtained by segmentalizing a base mesh are hierarchized for each definition and packed for each of partial areas of an object, is set as a frame;
unpacking the displacement values of the subdivision points of a desired hierarchy of a desired partial area, that have been packed in the 2D image of a current frame of the displacement video;
segmentalizing the base mesh of the current frame; and
applying the displacement values of the subdivision points to the subdivision points of the segmentalized base mesh, wherein
the base mesh is generated by decimating, from an original mesh as an encoding target that is constituted of vertices and connections expressing a 3D structure of the object, the vertices, and is a mesh which is coarser than the original mesh, and
the displacement values are positional differences between the subdivision points and the vertices of the original mesh.

13. An information processing apparatus, comprising:
a base mesh vertex displacement value derivation unit which derives base mesh vertex displacement values which are displacement values of vertices of a base mesh;
a packing unit which hierarchizes, for each definition, displacement values of subdivision points obtained by segmentalizing the base mesh, and packs the base mesh vertex displacement values and the hierarchized displacement values of the subdivision points in a 2D image; and
a displacement video encoding unit which encodes a displacement video in which the 2D image is set as a frame, wherein
the base mesh is generated by decimating, from an original mesh as an encoding target that is constituted of vertices and connections expressing a 3D structure of an object, the vertices, and is a mesh which is coarser than the original mesh,
the displacement values of the subdivision points are positional differences between the subdivision points and the vertices of the original mesh, and
the base mesh vertex displacement values are positional differences between the vertices of the base mesh and the vertices of the original mesh.

14. The information processing apparatus according to claim 13, further comprising:
a base mesh encoding unit which encodes the base mesh of a current frame; and
a base mesh decoding unit which decodes encoded data of the base mesh of the current frame, wherein
the base mesh vertex displacement value derivation unit derives, as the base mesh vertex displacement values, displacements of the vertices between the base mesh of the current frame obtained before encoding and the base mesh of the current frame that has been encoded and decoded.

15. The information processing apparatus according to claim 13, wherein
the base mesh vertex displacement value derivation unit derives, as the base mesh vertex displacement values, displacements of the vertices between the base mesh of a reference frame and the base mesh of a current frame.

16. An information processing method, comprising:
deriving base mesh vertex displacement values which are displacement values of vertices of a base mesh;
hierarchizing, for each definition, displacement values of subdivision points obtained by segmentalizing the base mesh, and packing the base mesh vertex displacement values and the hierarchized displacement values of the subdivision points in a 2D image; and
encoding a displacement video in which the 2D image is set as a frame, wherein
the base mesh is generated by decimating, from an original mesh as an encoding target that is constituted of vertices and connections expressing a 3D structure of an object, the vertices, and is a mesh which is coarser than the original mesh,
the displacement values of the subdivision points are positional differences between the subdivision points and the vertices of the original mesh, and
the base mesh vertex displacement values are positional differences between the vertices of the base mesh and the vertices of the original mesh.

17. An information processing apparatus, comprising:
a displacement video decoding unit which decodes a bit stream and generates a displacement video in which a 2D image, in which base mesh vertex displacement values which are displacement values of vertices of a base mesh and displacement values of subdivision points obtained by segmentalizing the base mesh are packed, is set as a frame;
an unpacking unit which unpacks the base mesh vertex displacement values and the displacement values of the subdivision points that have been packed in the 2D image of a current frame of the displacement video;
a base mesh vertex position application unit which applies the base mesh vertex displacement values to the vertices of the base mesh;
a segmentation unit which segmentalizes the base mesh in which the base mesh vertex displacement values are applied to the vertices; and
a displacement value application unit which applies the displacement values of the subdivision points to the subdivision points of the segmentalized base mesh, wherein
the base mesh is generated by decimating, from an original mesh as an encoding target that is constituted of vertices and connections expressing a 3D structure of an object, the vertices, and is a mesh which is coarser than the original mesh,
the displacement values of the subdivision points are positional differences between the subdivision points and the vertices of the original mesh, and
the base mesh vertex displacement values are positional differences between the vertices of the base mesh and the vertices of the original mesh.

18. The information processing apparatus according to claim 17, further comprising:
a base mesh decoding unit which decodes a bit stream and generates the base mesh of the current frame, wherein
the base mesh vertex position application unit applies the base mesh vertex displacement values to the vertices of the generated base mesh of the current frame.

19. The information processing apparatus according to claim 17, wherein
the base mesh vertex position application unit applies the base mesh vertex displacement values to the vertices of the base mesh of a reference frame.

20. An information processing method, comprising:
decoding a bit stream and generating a displacement video in which a 2D image, in which base mesh vertex displacement values which are displacement values of vertices of a base mesh and displacement values of subdivision points obtained by segmentalizing the base mesh are packed, is set as a frame;
unpacking the base mesh vertex displacement values and the displacement values of the subdivision points that have been packed in the 2D image of a current frame of the displacement video;
applying the base mesh vertex displacement values to the vertices of the base mesh;
segmentalizing the base mesh in which the base mesh vertex displacement values are applied to the vertices; and
applying the displacement values of the subdivision points to the subdivision points of the segmentalized base mesh, wherein
the base mesh is generated by decimating, from an original mesh as an encoding target that is constituted of vertices and connections expressing a 3D structure of an object, the vertices, and is a mesh which is coarser than the original mesh,
the displacement values of the subdivision points are positional differences between the subdivision points and the vertices of the original mesh, and
the base mesh vertex displacement values are positional differences between the vertices of the base mesh and the vertices of the original mesh.
